# EUROPEAN PATENT APPLICATION

(11) **EP 3 567 663 A1**
(43) Date of publication of application: **13.11.2019**
(21) Application number: 17890118.7
(22) Date of filing: 27.12.2017
(51) Int. Cl.: H01M 4/62, C08L 27/16, C08L 101/02, H01M 10/0566

(54) **NON-AQUEOUS ELECTROLYTE SECONDARY BATTERY AND MATERIAL FOR USE IN SAME**

(30) Priority: 06.01.2017 JP 2017001343; 06.01.2017 JP 2017001346; 24.03.2017 JP 2017059725
(71) Applicant: Mitsui Chemicals, Inc., Minato-ku Tokyo 105-7122 (JP)
(72) Inventor: YAMAMOTO Shinji, Sodegaura-shi Chiba 299-0265 (JP); MIZUNO Yu, Sodegaura-shi Chiba 299-0265 (JP); ENDO Yuri, Sodegaura-shi Chiba 299-0265 (JP)
(74) Representative: J A Kemp LLP
(86) International application number: PCT/JP2017/046855
(87) International publication number: WO 2018/128139

(57) **Abstract**

In a lithium ion secondary battery according to one embodiment of the present invention, an electrode includes an electrode active material, a conductive auxiliary agent, and a binding material configured by a binding component that binds the conductive auxiliary agent and forms a conduction path between the electrode active material, and by a melting point depressant that lowers a melting point of the binding component. The melting point depressant is a PTC functionality-imparting component that lowers the melting start temperature of the binding material and imparts the PTC functionality to the lithium ion secondary battery. The lithium ion secondary battery according to the invention is configured such that, when short circuit heat generation has occurred within the battery due to a conductive foreign substance, the binding material at a periphery of the foreign substance melts to sever the conduction path.

## Description

### CROSS-REFERENCE TO RELATED APPLICATIONS

The present application claims priority from Japanese Patent Application Nos. 2017-1343 and 2017-1346 filed on January 6, 2017, and from Japanese Patent Application No. 2017-59725 filed on March 24, 2017, and the entire disclosure of each of the foregoing applications is incorporated by reference herein. Further, the entire disclosure of each patent, patent application and document cited in the present application is incorporated by reference as is in the present specification.

### Technical Field

The present invention relates to a non-aqueous electrolyte secondary battery and to a material used therein and, more specifically, relates to a composite PTC binding material for a non-aqueous electrolyte secondary battery, and to a positive electrode, a non-aqueous electrolyte secondary battery, and a lithium ion secondary battery including the composite PTC binding material.

In recent years, lithium ion secondary batteries are widely used as power sources for electronic appliances such as portable telephones and laptop computers, or for electric automobiles or electricity storage. In particular, recently, there has been a drastic increase in demand for high capacity and high output batteries having high energy density that can be installed in hybrid vehicles and electric automobiles. These lithium ion secondary batteries, while having the advantage of high energy density, also require sufficient countermeasures with respect to safety, owing to the use of lithium metal and a non-aqueous electrolyte.

As a method for enhancing safety, a technique of coating a hyper-branched polymer onto a positive electrode active material has been disclosed (see, for example, Patent Document 1). It is described that, when an abnormality occurs in a lithium ion battery and the temperature of the lithium ion battery rises, a film of this polymer undergoes a crosslinking reaction and thereby suppresses thermal runaway. However, in a case in which a lithium ion secondary battery instantaneously generates heat due to a physical shock such as piercing by a nail, there may be cases in which the manifestation of the safety mechanism due to the above-described crosslinking reaction is belated.

Conventionally, methods whereby, for example, in such cases, an increase in internal pressure is released by a safety valve, or a PTC element that increases resistance and blocks current in response to heat generated by an external short circuit is incorporated in the battery, have been proposed. However, it is not necessarily the case that a separator disposed at a distance from the location of heat generation will melt. As a result, a system has been proposed in which, when a short circuit occurs inside an electrode, owing to the PTC functionality of an electrode active material, an electron-conductive material, or an electron-conductive material configuring a positive electrode current collector corresponding to short circuit current pathways, the short circuit current is autonomously attenuated (see, for example, Patent Document 2).

In conventional PTC elements, materials in which alkaline earth metals such as Sr, or Pb or the like, have been added to barium titanate, or Cr, Ce, Mn, La, Y, Nb, Nd or the like, or further, high-density polyethylene or low-density polyethylene or mixed bodies thereof, have been used; however, since these PTC elements form intermediate layers or the like that are surplus to the component elements of a battery, there have been issues in terms of manufacturing processes being further complicated and the energy density of an electrode being reduced.

Further, the positive electrode of the lithium secondary battery disclosed in Patent Document 3 has a mix layer of two or more layers including a lithium-containing oxide as a positive electrode active material on the surface of a current collector substrate, and a positive electrode active material having a high heat generation start temperature is used at a mix layer nearest to the surface. In this conventional technique, the safety of the surface layer part of the positive electrode, which holds the greatest risk of heat generation in the mix layer itself, is enhanced owing to its disposal in opposition to the negative electrode, whereby the occurrence of thermal runaway is suppressed. Since, in lower mix layers, which have a lower heat generation start temperature than the mix layer nearest to the surface, a lithium-containing complex oxide having high capacity density can be used, it is possible to improve battery capacity.

Further, the invention described in Patent Document 4 is a positive electrode for a lithium secondary battery that is provided with a current collector substrate and a positive electrode coated film consisting of plural mix layers on the current collector substrate, the positive electrode coated film including two or more lithium-containing compounds having different heat generation start temperatures as positive electrode active materials, at least one lithium-containing compound among the two or more lithium-containing compounds having a heat generation start temperature of 300°C or higher, and a first mix layer, nearest to the current collector substrate, containing at least one lithium-containing compound having a heat generation start temperature of 300°C or higher. In the invention of Patent Document 4, the positive electrode coated film is configured from plural mix layers, and at least one lithium-containing compound having a heat generation start temperature of 300°C or higher is included in the first mix layer nearest to the current collector substrate, which generates high Joule heat in the case of an internal short circuit in a nail piercing test, as a result of which heat generation by the positive electrode due to an internal short circuit can be reliably inhibited.

However, if the type of positive electrode active material is varied in the positive electrode mix layer, the degrees of deformation of the positive electrode active materials due to swelling and contraction of the crystal lattices in conjunction with electrical charging and discharging, differ, which leads to deterioration of the current collecting structure in the positive electrode mix layer and is thus undesirable.

### Prior Art Documents

### Patent Documents

Patent Document 1: Japanese Patent Application Laid-open No. 2010-157512
Patent Document 2: International Publication (WO) No. 1999/034469
Patent Document 3: Japanese Patent Application Laid-open No. 2003-036838
Patent Document 4: Japanese Patent No. 5032800

### SUMMARY OF THE INVENTION

### Problem to be Solved by the Invention

The problem to be solved by the invention is to provide a lithium secondary battery configured such that the resistance of an electrode mix layer is increased by thermofusion of a binding material in response to an instantaneous temperature rise of the lithium battery, and to provide a lithium ion secondary battery configured such that heat generation in a positive electrode mix layer can be inhibited in response to an instantaneous temperature rise occurring at the time of an internal short circuit, while maintaining the cycle characteristics and high capacity of a lithium ion secondary battery.

### Means for Solving the Problem

A non-aqueous electrolyte secondary battery according to one embodiment of the present invention includes: at least a pair of electrodes consisting of a positive electrode and a negative electrode; a separator; and a non-aqueous electrolyte, the electrodes including, on one or both surfaces of a current collector, an electrode mix layer including a conductive auxiliary agent, a binding material, and an electrode active material that includes one or more materials selected from the group consisting of materials capable of insertion and extraction of a lithium ion. The above-described binding material is a composite PTC binding material including polyvinylidene fluoride (PVDF) and a PTC functionality-imparting component, and a melting start temperature and/or a melting peak temperature of the binding material measured by a differential scanning calorimetry in the presence of the non-aqueous electrolyte is lower than in a case in which the binding material includes only polyvinylidene fluoride.

A composite PTC binding material for a non-aqueous electrolyte secondary battery according to another embodiment of the present invention includes a binding component and a PTC functionality-imparting component, a melting start temperature and/or a melting peak temperature of the composite PTC binding material measured by a differential scanning calorimetry in the presence of a non-aqueous electrolyte being lower than in a case in which a binding material includes only the binding component.

A positive electrode for a lithium ion secondary battery according to another embodiment of the present invention includes a current collector and a positive electrode mix layer coated onto this current collector. The positive electrode mix layer includes: a layer A including a positive electrode active material, a conductive auxiliary agent and a binding material; and a layer B including a positive electrode active material, a conductive auxiliary agent and the above-described composite PTC binding material.

While the positioning of the layer A and the layer B in the positive electrode mix layer is not particularly limited, preferably, in a thickness direction of the positive electrode mix layer, the layer B is provided at a side of the current collector, and the layer A is provided at an opposite side of the layer B from the current collector-that is, at a side of the separator. As a result of this configuration, in a case in which the temperature has increased owing to an internal short circuit, a conduction path severance action can be effectively obtained between the current collector and the positive electrode mix layer, by the action of the PTC functionality-imparting component included in the layer B. Further, owing to the action of the binding component included in the layer A, improved performance in high temperature preservation tests and cycle durability tests can be expected.

Further, by providing the layer A at the side of the current collector and the layer B at the separator side, in a case in which the temperature has increased owing to an internal short circuit, diffusion of lithium ions at a contact interface between the separator and the positive electrode mix layer is inhibited even at a temperature lower than the shutdown temperature of the separator by the action of the PTC functionality-imparting component included in the layer B, and a severance action relative to lithium ion pathways can be effectively obtained, and in addition, owing to the action of the binding component included in the layer A, improved performance in high temperature preservation tests and cycle durability tests can be expected. While the PTC functionality-imparting component may be included in the layer A at a lower concentration than in the layer B, from the viewpoint of high temperature preservation tests and cycle durability tests, the PTC functionality-imparting component is preferably not included.

From a different viewpoint, in the lithium ion secondary battery according to the present invention, the electrode includes an electrode active material, a conductive auxiliary agent, and a binding material that binds the conductive auxiliary agent and forms a conduction path, and the binding material is configured by a binding component and a melting point depressant that lowers the melting point of the binding component. When short circuit heat generation has occurred within the battery due to a conductive foreign substance, the lithium ion secondary battery according to the present invention melts the binding material around the foreign substance and severs the conduction path.

### Effect of the Invention

The composite PTC binding material according to the present invention has the advantages of increasing resistance due to PTC functionality by melting at least a part of the binding material in response to a temperature rise in a non-aqueous electrolyte secondary battery, thereby suppressing thermal runaway in the non-aqueous electrolyte secondary battery.

### BRIEF DESCRIPTION OF THE DRAWINGS

Fig. 1 is a sectional view of a layer-type non-aqueous electrolyte secondary battery according to one embodiment of the present invention.
Fig. 2 is a sectional view of a roll-type non-aqueous electrolyte secondary battery according to another embodiment of the present invention.
Fig. 3 is a sectional view of a positive electrode mix layer according to one embodiment of the present invention at a time of testing by piercing with a nail.
Fig. 4 is a sectional view of a positive electrode mix layer according to another embodiment of the present invention at a time of testing by piercing with a nail.
Fig. 5 is a schematic diagram showing a state in which a lithium ion secondary battery according to an embodiment is pierced by a nail, which is a conductive foreign substance.
Fig. 6 is a schematic diagram showing a relationship between an electrode active material and a binding material in an embodiment: (A) the positive electrode immediately after a short circuit; and (B) the positive electrode at the time of a short circuit (heat generation).
Fig. 7 is a schematic diagram showing an action of a melting point depressant on a binding agent of an embodiment: (A) a cluster state of a PVDF polymer chain; (B) a cluster state of a (PVDF/melting point depressant) polymer chain; and (C) a swollen state of a PVDF polymer chain.
Fig. 8 shows exemplary DSC-curves of samples of PVDF alone and of PVDF combined with PMMA.
Fig. 9A is a graph that shows a heat generation profile due to a nail-piercing test on a roll-type battery measured in Test Example 1.
Fig. 9B is an enlarged view of the heat generation profile shown in Fig. 9A immediately after the start of measurement.
Fig. 10A is a graph that shows a heat generation profile due to a nail-piercing test on a layer-type battery measured in Test Example 2.
Fig. 10B is an enlarged view of the heat generation profile shown in Fig. 10A immediately after the start of measurement.
Fig. 11A is a graph that shows a heat generation profile due to a nail-piercing test on a roll-type battery measured in Test Example 3.
Fig. 11B is an enlarged view of the heat generation profile shown in Fig. 11A immediately after the start of measurement.
Fig. 12A is a graph that shows a heat generation profile due to a nail-piercing test on a roll-type battery measured in Test Example 30.
Fig. 12B is an enlarged view of the heat generation profile shown in Fig. 12A immediately after the start of measurement.

### MODES FOR CARRYING OUT THE INVENTION

In the following, a composite PTC binding material for a non-aqueous electrolyte secondary battery according to the present invention, and a positive electrode and a non-aqueous electrolyte secondary battery using the composite PTC binding material, are explained. A composite PTC binding material according to one embodiment of the present invention includes a binding component and a PTC functionality-imparting component. This composite PTC binding material has attributes such that a melting start temperature and/or a melting peak temperature as measured by a differential scanning calorimetry in the presence of a non-aqueous electrolyte, is lower than in a case of the binding component alone. Accordingly, the composite PTC binding material according to the present embodiment includes at least the two components of a binding component and a PTC functionality-imparting component, and these may be a mixture in a powdered state or may be mixed in a molecular state by compatibilizing the two components.

### Non-aqueous Electrolyte Secondary Battery

Examples of a non-aqueous electrolyte secondary battery using the composite PTC binding material according to the present invention include: a metal ion secondary battery including, in an electrode mix layer, an electrode active material capable of insertion and extraction of a metal ion, a conductive auxiliary agent, and a composite PTC binding material; additionally, an air secondary battery using air as a positive electrode active substance; and, further, a solid electrolyte secondary battery using a polymer gel electrolyte. Among these, a non-aqueous electrolyte lithium ion secondary battery using, for example, ethylene carbonate (EC) or propylene carbonate (PC) as the electrolyte solvent, preferably uses the composite PTC binding material according to the present invention from the viewpoint of ensuring safety. As an exemplary embodiment, an example of a lithium ion secondary battery provided with an electrode mix layer in which an electrode active material and a conductive auxiliary agent are bonded using the composite PTC binding material according to the present invention, is explained. The above-mentioned electrode mix layer may be the positive electrode or may be the negative electrode.

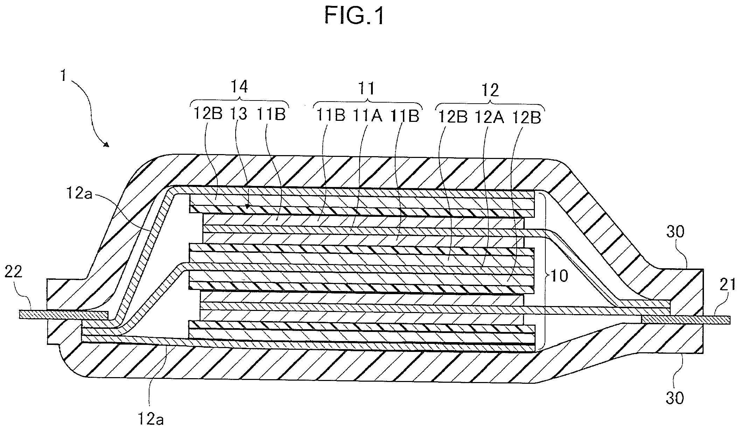

A non-aqueous electrolyte secondary battery according to one embodiment of the present invention is explained in detail with reference to drawings. Fig. 1 is a schematic sectional view showing one example of a non-aqueous electrolyte secondary battery according to one embodiment of the present invention. This kind of non-aqueous electrolyte secondary battery is referred to as a layer-type lithium ion secondary battery.

As shown in Fig. 1, non-aqueous electrolyte secondary battery 1 of the present embodiment has a configuration in which battery element 10, to which positive electrode lead 21 and negative electrode lead 22 are attached, is sealed inside outer packaging 30 formed from a laminate film. Further, in the present exemplary embodiment, positive electrode lead 21 and negative electrode lead 22 are guided in opposite directions from the inside of outer packaging 30 toward the outside thereof. While not shown in the drawings, the positive electrode lead and the negative electrode lead may be guided in the same direction from the inside of the outer packaging toward the outside thereof. Further, this kind of positive electrode lead and negative electrode lead can be attached to a positive electrode current collector and a negative electrode current collector, which are described below, by ultrasonic welding or resistance welding, for example.

Positive electrode lead 21 and negative electrode lead 22 are configured, for example, by a metal material such as aluminum (Al), copper (Cu), titanium (Ti), nickel (Ni), alloys thereof, or stainless steel (SUS). However, positive electrode lead 21 and negative electrode lead 22 are not limited thereto, and conventionally-known materials used as leads in lithium ion secondary batteries can be used.

Outer packaging 30 is preferably formed from a film-type outer packaging material, for example, from the viewpoints of size reduction and weight reduction, but is not limited thereto and conventionally-known materials used as outer packaging in lithium ion secondary batteries can be used. Specifically, metallic can casing can be applied.

From the viewpoints of superior high output and cooling performance, and of favorable compatibility with batteries for large machinery such as electrically-powered automobiles and hybrid electric vehicles, a polymer/metal composite laminate film having superior thermal conductivity is a preferable example. More specifically, an outer packaging that can be favorably used is formed from an outer packaging material that is a laminate film having a three-layer structure of polypropylene as a thermocompression bonding layer, aluminum as a metal layer, and NYLON as an external protection layer, layered in this order.

Instead of the above-described laminate film, the outer packaging may be configured by another structure such as a laminate film having no metal material, a polymer film of polypropylene or the like, or a metal film.

The general configuration of the outer packaging can be expressed in terms of a layered structure of "external protection layer / metal layer / thermocompression bonding layer" (however, each of the external protection layer and the thermocompression bonding layer may be configured by plural layers). Any metal layer that functions as a barrier film inhibiting moisture permeation suffices, and stainless steel foil, nickel foil or plated iron foil can be used as alternatives to aluminum foil; however, aluminum foil, which is thin, lightweight, and has superior processability, can be favorably used.

As shown in Fig. 1, battery element 10 has a configuration having multiple sets of: positive electrode 11, having positive electrode active material layer 11B formed on both principal surfaces of positive electrode current collector 11A; separator 13; and negative electrode 12, having negative electrode active material layer 12B formed on both principal surfaces of negative electrode current collector 12A. Positive electrode active material layer 11B formed on one principal surface of positive electrode current collector 11A of one positive electrode 11, and negative electrode active material layer 12B formed on one principal surface of negative electrode current collector 12A of negative electrode 12 adjacent to this one positive electrode 11, face each other with separator 13 disposed therebetween. In this way, the multiple sets of the sequentially layered positive electrode, separator, and negative electrode are stacked.

By injection of an electrolyte solution including an electrolyte (LiPF₆), an adjacent positive electrode active material layer 11B, separator 13 and negative electrode active material layer 12B configure one single-cell layer 14. Accordingly, lithium ion secondary battery 1 of the present embodiment has a configuration in which plural single-cell layers 14 are layered to be electrically connected in parallel. It should be noted that the positive electrode and the negative electrode may have a configuration in which its corresponding active material layer is formed on only one principal surface of a current collector.

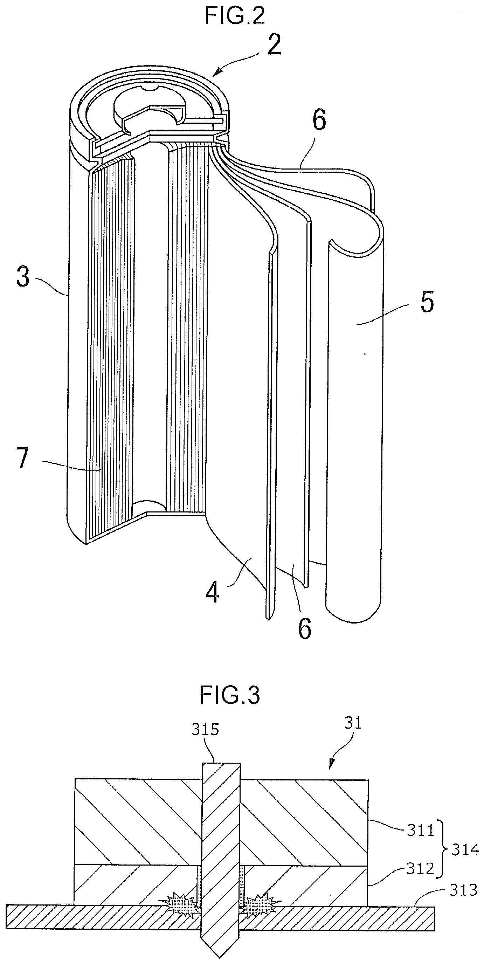

Fig. 2 is a schematic diagram showing one example of a non-aqueous electrolyte secondary battery according to another embodiment of the present invention. This kind of non-aqueous electrolyte secondary battery is referred to as a roll-type lithium ion secondary battery. As shown in Fig. 2, battery element 7 is formed by stacking and rolling positive electrode 4 having a positive electrode active substance layer formed on both principal surfaces of a positive electrode current collector, separator 6, negative electrode 5 having a negative electrode active substance layer formed on both principal surfaces of a negative electrode current collector, and separator 6, and then press molding.

In this configuration, a positive electrode active substance layer formed on one principal surface of a positive electrode current collector of one positive electrode 4, and a negative electrode active substance layer formed on one principal surface of a negative electrode current collector of a negative electrode 5 adjacent to this one positive electrode 4, face each other with separator 6 disposed therebetween. Further, the other positive electrode active substance layer and a further negative electrode active substance layer also face each other with a separator disposed therebetween. In this way, plural sets of sequentially layered positive electrode, separator, and negative electrode are disposed to face each other.

Further, an insulation layer (not shown) for electrical insulation between adjacent positive electrode current collectors or negative electrode current collectors may be provided at an outer periphery of a single-cell layer. This kind of insulation layer is preferably formed from a material that retains an electrolyte included in an electrolyte layer or the like and that prevents liquid leakage of the electrolyte at the outer periphery of a single-cell layer. Specifically, for example, general purpose plastics such as polypropylene (PP), polyethylene (PE), polyurethane (PUR), polyamide-based resin (PA), polytetrafluoroethylene (PTFE), polyvinylidene fluoride (PVDF), and polystyrene (PS), and thermoplastic olefin rubbers may be used. Further, silicon rubber may be used.

### (Positive electrode active material)

The positive electrode active material is not particularly limited as long as it is a material that is capable of insertion and extraction of lithium, and may be a positive electrode active material that is usually used in a lithium ion secondary battery. Specifically, examples include a lithium-manganese complex oxide (e.g., LiMn₂O₄), a lithium-nickel complex oxide (e.g., LiNiO₂), a lithium-cobalt complex oxide (an LCO such as LiCoO₂), a lithium-iron complex oxide (e.g., LiFeO₂), a nickel-manganese-cobalt complex oxide (an NMC such as LiNi_{0.5}Mn_{0.3}Co_{0.2}O₂, LiNi_{1/3}Mn_{1/3}Co_{1/3}O₂, LiNi_{0.4}Mn_{0.4}Co_{0.2}O₂, LiNi_{0.5}Mn_{0.3}Co_{0.2}O₂, LiNi_{0.6}Mn_{0.2}Co_{0.2}O₂, and LiNi_{0.8}Mn_{0.1}Co_{0.1}O₂,), a lithium-nickel-cobalt-aluminum complex oxide (an NCA such as LiNi_{0.8}Co_{0.15}Al_{0.05}O₂), a lithium-nickel-manganese complex oxide (e.g., LiNi_{0.5}Mn_{0.5}O₂), a lithium-nickel-cobalt complex oxide (e.g., LiNi_{0.8}Co_{0.2}O₂), a lithium-nickel-cobalt-manganese complex oxide, a lithium-transition metal phosphate compound (e.g., LiFePO₄), and a lithium-transition metal sulphate compound (e.g., LiₓFe₂(SO₄)₃), a solid solution compound (Li₂MO₃-LiMO₂, M representing Ni, Co, or Mn), a vanadium oxide compound, a silicate compound and a sulphur-containing compound. Among these, preferable examples of the positive electrode active material include a lithium-cobalt complex oxide (LCO), a nickel-manganese-cobalt complex oxide (NMC) and a nickel-cobalt-aluminum complex oxide (NCA).

These positive electrode active materials may be used singly or may be used in a mixture of more than one thereof. The content of positive electrode active material in the electrode mix layer is usually 10 mass% or more, preferably 30 mass% or more, even more preferably 50 mass% or more, and particularly preferably 70 mass% or more. Further, the content of positive electrode active material in the electrode mix layer is usually 99.9 mass% or less, and preferably 99 mass% or less.

### (Negative electrode active material)

As the negative electrode active material, at least one selected from the group consisting of metallic lithium, a lithium-containing alloy, a metal or alloy that can be alloyed with lithium, an oxide capable of doping or de-doping with a lithium ion, a transition metal nitride capable of doping or de-doping with a lithium ion, and a carbon material capable of doping or de-doping with a lithium ion (which may be used singly or may be used in a mixture of two or more thereof) can be used.

Examples of a metal or alloy that can be alloyed with lithium (or a lithium ion) include silicon, silicon alloy, tin and tin alloy. Further, lithium titanate can be used.

Among these, a carbon material capable of doping or de-doping with a lithium ion is preferable. Examples of this kind of carbon material include carbon black, activated carbon, graphite material (artificial graphite, natural graphite), and amorphous carbon materials. The form of the carbon material may be any of fibrous, spheroidal, potato-shaped, or flake-shaped.

Specific examples of the amorphous carbon material include hard carbon, coke, mesocarbon microbeads (MCMB) fired at 1500°C or lower, and meso-phase pitch carbon fiber (MCF).

Examples of the graphite material include natural graphite and artificial graphite. Graphitized MCMB, graphitized MCF and the like may be used as artificial graphite. The graphite material that can be used may include boron. The graphite material that can be used may be coated with a metal such as gold, platinum, silver, copper, or tin, or may be coated with amorphous carbon, or may be a mixture of amorphous carbon and graphite. These carbon materials may be used singly, or two or more carbon materials may be used as a mixture.

### (Conductive auxiliary agent)

The electrode mix layer preferably includes a conductive auxiliary agent. Known conductive auxiliary agents can be used as the conductive auxiliary agent used in the present invention. The known conductive auxiliary agents are not particularly limited as long as they are carbon materials having electrical conductivity, and, for example, graphite, carbon black, conductive carbon fiber (carbon nanotubes, carbon nanofibers, carbon fibers), and fullerene can be used singly or in combination of two or more thereof. Examples of commercial carbon black include TOKABLACK #4300, #4400, #4500, #5500 and the like (manufactured by Tokai Carbon Co., Ltd.; furnace black), PRINTEX L and the like (manufactured by Degussa-Hüls AG; furnace black), Raven 7000, 5750, 5250, 5000 ULTRA III, 5000 ULTRA and the like, CONDUCTEX SC ULTRA, CONDUCTEX 975 ULTRA and the like, and PUER BLACK 100, 115, 205 and the like (manufactured by Colombian Chemicals Company; furnace black), #2350, #2400B, #2600B, #30050B, #3030B, #3230B, #3350B, #3400B, #5400B and the like (manufactured by Mitsubishi Chemical Corporation; furnace black), MONARCH 1400, 1300, 900, VULCAN XC-72R, BLACK PEARLS 2000, LITX-50, LITX-200 and the like (manufactured by Cabot Corporation; furnace black), ENSACO 250G, ENSACO 260G, ENSACO 350G, Super P-Li (manufactured by TIMCAL Ltd.), KETJENBLACK EC-300J, EC-600JD (manufactured by Akzo Nobel), and DENKA BLACK, DENKA BLACK HS-100, FX-35 (manufactured by Denka Co., Ltd.; acetylene black), and examples of graphite include artificial graphite as well as natural graphite such as flaky graphite, bulky graphite and earthy graphite. However, the invention is not limited to these and conventionally-known materials that are used as the negative electrode active material in lithium ion secondary batteries, can be used. One negative electrode active material can be used singly or two or more negative electrode active materials can be used in combination. The content of the conductive auxiliary agent included in the electrode mix layer is preferably at least 1 mass% and, for example, is preferably from 1 mass% to 10 mass%.

### (Composite PTC binding material)

The composite PTC binding material includes a binding component and a PTC functionality-imparting component. The aim of using a binding material in production of an electrode is, firstly, to ensure the adhesion of a powder-form active material without substantially covering over an active material surface that is electrochemically active. The binding material should have adhesiveness with respect to the current collector metal, and this is achieved by the presence of a polar group in the binding material. Further, the binding material should have sufficient flexibility in relation to the handling of an electrode and needs to be able to respond to dimensional changes in an active material during a charging and discharging cycle. The binding material should be provided with specific electrochemical properties and should have compatibility with the non-aqueous electrolyte solution that is used. Finally, since reducing agents and oxidizing agents that are used as active materials are extremely powerful, the binding material should have the minimum possible reactivity so as to be able to endure extreme operation conditions without deterioration.

Accordingly, as the binding component in the present exemplary embodiment, a known polymer component that is suitable for these aims can be used. Examples of preferable binding components include polyvinylidene fluoride (PVDF), polytetrafluoroethylene (PTFE), copolymers of vinylidene fluoride and other monomers, and derivatives thereof. The mechanical properties and electrochemical properties of PVDF are particularly preferable, being suitable for the above-described multiple aims required of the binding material.

The "PTC functionality-imparting component" in the present exemplary embodiment refers to a component that imparts PTC functionality to, or strengthens the PTC functionality of, the binding material by lowering the melting start temperature and/or the melting peak temperature of the above-described binding component. It is conceivable that the relationship between PTC (positive temperature coefficient) functionality, whereby the resistance value increases in conjunction with an increase in temperature, and the melting of the binding component is as follows. For example, when a short circuit current flows through an electrode configured by binding an electrode active substance and a conductive auxiliary agent, the temperature of the electrode increases owing to short circuit heat generation. At this time, it is inferred that when the binding material melts, the electrode active material and the conductive auxiliary agent, which are inorganic substances, are convoluted therewith forming a structure having a fibrillary (fiber) form, whereby the shape of the electrode changes, at least some conduction paths within the electrode are severed, and the resistance of the electrode increases. Since this kind of functionality is exhibited owing to a reduction in the melting start temperature and/or the melting peak temperature of the binding material, it follows that the composite PTC binding material of the present embodiment features a decreased melting start temperature and/or melting peak temperature as compared to the melting start temperature and/or melting peak temperature of the binding component used singly as normal.

For example, it has been reported that the melting point of PVDF, which is one preferable binding component, is approximately 180°C when used singly, and it is conceivable that the melting point thereof is slightly lowered owing to contact with a non-aqueous electrolyte in a non-aqueous electrolyte secondary battery. The composite PTC binding material according to the present exemplary embodiment, by further including a PTC functionality-imparting component, melts at a time of temperature rise of the non-aqueous electrolyte secondary battery, increases the resistance of the electrode mix layer from a lower temperature region, and suppresses thermal runaway of the non-aqueous electrolyte secondary battery. The composite PTC binding material according to the present invention, by further including a PTC functionality-imparting component, lowers either one or both of the melting start temperature and melting peak temperature compared to in a case of use of PVDF alone. From the viewpoint of suppression of thermal runaway, the melting start temperature and/or melting peak temperature of the composite PTC binding material is preferably low; however, if excessively low, the functions of the binding material are inhibited, which is undesirable. As a result, the melting start temperature of the composite PTC binding material is preferably from approximately 60°C to approximately 150°C, more preferably from approximately 65°C to approximately 130°C, and yet more preferably from approximately 70°C to approximately 100°C.

There are cases in which the melting peak temperature (melting point) of the composite PTC binding material is also lowered, and under the above-described measurement conditions, the melting peak temperature of the composite PTC binding material is preferably 70°C to 130°C. The melting peak temperature of the composite PTC binding material is preferably 70°C or higher in view of thermal stability. Further, from the viewpoint of safety, the melting point of the binding material is preferably 130°C or lower. The melting point is further preferably less than 130°C, yet more preferably 120°C or lower, and still yet more preferably 110°C or lower.

Accordingly, the composite PTC binding material of the present embodiment may be obtained by mixing a binding component and a PTC functionality-imparting component, measuring the resultant mixture by differential scanning calorimetry in the presence of a non-aqueous electrolyte, and selecting a mixture that exhibits a decreased melting start temperature and/or a decreased melting peak temperature as compared to the case of measuring the binding component alone under the same conditions. In the present exemplary embodiment, the melting start temperature means the temperature at a time at which heat absorption analyzed by differential scanning calorimetry (referred to below as "DSC") rises from a baseline, and specifically, in compliance with JIS7121 (plastic transition temperature measurement methods), is taken as the temperature at which a straight line formed by extending a low-temperature side baseline to a high-temperature side, and a tangent line drawn at a point of maximum gradient of a curved line at a low-temperature side of a melting peak, intersect. Alternatively, heat absorption amount due to the binding material melting may be measured from a peak area of a DSC curve, and the temperature at which the heat absorption amount reaches approximately one-half of the total heat absorption amount may be taken as an index of the melting start temperature. This is because, owing to reduction of the melting start temperature of the binding material, heat absorption begins at a lower temperature, and PTC functionality is exhibited at a time at which the heat absorption amount reaches a certain amount.

### (Measurement methods for melting point and melting start temperature)

The high-sensitivity differential scanning calorimeter DSC7000X manufactured by Hitachi High-tech Science Corporation or the like is used for the measurement. For example, the binding component and the PTC functionality-imparting component are mixed in a mortar after being dissolved in an organic solvent or mixed in a mortar in their original powder form, and approximately 5 mg of dried powder is loaded into an aluminum pan, to which is added a non-aqueous electrolyte to form a sample. The non-aqueous electrolyte added to the sample is preferably an electrolyte solution in which lithium ions including at least LiPF₆ as the electrolyte have been dissolved in a single solvent or in a solvent mixture of plural organic solvents selected from cyclic carbonates and chain carbonates. In the present embodiment, a non-aqueous electrolyte is used in which 1M of lithium hexafluoride phosphate (LiPF₆) has been dissolved in a 3:7 mixture solution of ethylene carbonate (EC) and ethyl methyl carbonate (EMC). The measurement conditions are, for example, an increase of 5°C/min from room temperature to approximately 200°C. Calculation can be made from the heat absorption curve obtained.

While the PTC functionality-imparting component is not particularly limited as long as it is a substance that can reduce the melting start temperature and/or the melting peak temperature of the PVDF that is used as the binding component, a compound that is compatible with (adapted to) PVDF, which is a crystalline polymer, and preferably, a crystalline or non-crystalline polymer compound, can be used. In the present specification, the term "compatible" refers to a state in which two different substances, polymers in particular, mix uniformly, and the term "compatible" encompasses a case in which the uniform mixing occurs entirely and a case in which the uniform mixing occurs in part. It can be determined whether or not there has been even mixing by whether the sample after mixing is transparent or has film-forming capability. An example of the above compound is a compound including a carbonyl group or a cyano group. A carbonyl group has a structure of -C(=O)- and since an oxygen atom has much greater electronegativity than a carbon atom, the electrons of the C=O bond are present biased further toward the vicinity of the oxygen atom having greater electronegativity than the vicinity of the carbon atom that is electrically positive. Similarly, a cyano group has a triplex structure between a carbon atom and a nitrogen atom, the electrons being biased onto the nitrogen atom, as a result of which a cyano group is a strongly electron attracting group.

Generally, in a case of compatibility between a crystalline polymer and a non-crystalline polymer, it is known that a reduction in the melting point of the crystalline polymer will occur. The factor having the maximum influence on the melting point reduction is a thermodynamic parameter χ₁₂ value expressing the strength of interaction between the two polymers, derived by the Flory-Huggins theory. Based on this theory, in compatible crystalline / non-crystalline polymer blend systems, it is said that a melting point reduction occurs when the χ₁₂ value exhibits a negative value. In a preferable embodiment, the compatible substance is a crystalline or non-crystalline polymer including a carboxyl group (-COOH), carboxylic acid ester (-COO-R), a carbonate group (R-O-(C=O)-O-R'), an imide group (R-CONHCO-R'), or an amide group (R-C=ONH-R').

In the present embodiment, while the precise reason that a PTC functionality-imparting component formed of this kind of compatible substance lowers the melting point of PVDF is not clear, it is inferred that the fact that these additives have electrical properties (polarities) derived from a carbonyl group or a cyano group strengthens the interaction with PVDF and exhibits the action of lowering the melting point of PVDF.

Accordingly, the PTC functionality-imparting component in a preferable embodiment is one or more selected from the group consisting of acrylic acid (AAc), methacrylic acid (MAc), polymethyl acrylate (PMA), polymethyl methacrylate (PMMA), polyvinyl acetate (PVAc), di-2-ethylhexyl phthalate (DEHP), polybutylene succinate (PBS), polycarbonate (PC), polyacrylonitrile (PAN), polyamide (PA), polyimide (PI), polyamide imide (PAI), and derivatives (copolymers) thereof.

Examples of a methacrylic acid ester having favorable compatibility with PVDF include the following compounds: methyl methacrylate, ethyl methacrylate, n-propyl methacrylate, isopropyl methacrylate, n-butyl methacrylate, isobutyl methacrylate, t-butyl methacrylate, hexyl methacrylate, octyl methacrylate, dodecyl methacrylate, stearyl methacrylate, 2-ethylhexyl methacrylate, phenyl methacrylate, benzyl methacrylate, methoxyethyl methacrylate, ethoxyethyl methacrylate, n-butoxyethyl methacrylate, isobutoxyethyl methacrylate, t-butoxyethyl methacrylate, phenoxyethyl methacrylate, nonylphenoxyethyl methacrylate, 3-methoxybutyl methacrylate, BLEMMER-PME-100 (trade name; manufactured by NOF Corporation), and BLEMMER-PME-200 (trade name; manufactured by NOF Corporation).

Among the methacrylic acid esters, the following are preferable in view, for example, of ease of acquisition and compatibility with PVDF. Methyl methacrylate, ethyl methacrylate, n-butyl methacrylate, t-butyl methacrylate, dodecyl methacrylate, stearyl methacrylate, and 2-ethylhexyl methacrylate are preferable, and methyl methacrylate, ethyl methacrylate, n-butyl methacrylate, and t-butyl methacrylate are more preferable. Vinyl monomers may be used singly or may be used in combination of two or more thereof.

Further, the following compounds can be favorably used as fluorinated alkyl methacrylates: 2,2,2-trifluoroethyl methacrylate, 2,2,3,3-tetrafluoropropyl methacrylate, 2,2,3,3,3-pentafluoropropyl methacrylate, 2,2,3,4,4,4-hexafluorobutyl methacrylate, 2,2,3,3,4,4,5,5-octafluoropentyl methacrylate, 2,2,2-trifluoroethyl-α-fluoroacrylate, 2,2,3,3-tetrafluoropropyl-α-fluoroacrylate, 2,2,3,3,3-pentafluoropropyl-α-fluoroacrylate, 2,2,3,3,4,4,5,5-octafluoropentyl-α-fluoroacrylate, and the like.

In one embodiment of the present invention, examples of the above-described PTC functionality-imparting component include an amide, an imide, and a maleimide.

A primary amide is preferable as the amide and examples include N-vinyl amide, divinyl amide, silyl (vinyl) amide, and glyoxylated vinyl amide.

Specific examples of the imide include divinyl imides such as N-vinyl imide, N-vinyl phthalimide, and vinyl acetamide.

Examples of the maleimide include monomaleimide, bismaleimide, trismaleimide and polymaleimide.

Specific examples of the bismaleimide include N,N'-bismaleimide-4,4'-diphenylmethane, 1,1'-(methylene-di-4,1-phenylene) bismaleimide, N,N'-(1,'-biphenyl-4,4'-diyl) bismaleimide, N,N'-(4-methyl-1,3-phenylene) bismaleimide, 1,1'-(3,3'-dimethyl-1,1'-biphenyl-4,4'-diyl) bismaleimide, N,N'-ethylene dimaleimide, N,N'-(1,2-phenylene) dimaleimide, N,N'-(1,3-phenylene) dimaleimide, N,N'-thiodimaleimide, N,N'-dithiodimaleimide, N,N'-ketone dimaleimide, N,N'-methylene bismaleimide, bismaleimide methyl ether, 1,2-bismaleimide-1,2-ethanediol, N,N'-4,4'-diphenyl ether bismaleimide, and 4,4'-bismaleimide diphenylsulfone.

The content of these PTC functionality-imparting components included in the composite PTC binding material is preferably from 1 to 50 mass%, more preferably from 5 to 40 mass%, and yet more preferably from 10 to 30 mass%. When the content of the PTC functionality-imparting component is lower than 1 mass%, the mechanism that lowers the melting point of the binding material is diminished, and further, when the content is in excess of 50 mass%, there is a risk of the binding force as a binding material relative to the electrode active material being reduced.

As the PTC functionality-imparting component, a copolymer of a vinylidene fluoride monomer and another fluorine-containing monomer or an oxygen-containing monomer may be used. Examples of another fluorine-containing monomer include vinyl fluoride, 3-propylene fluoride and fluoroalkyl vinyl ether, and examples of the oxygen-containing monomer include ethylene glycol. Preferable examples are PVDF-HFP (hexafluoropropylene) and PVDF-PEO (polyoxyethylene). When the PTC functionality-imparting component is at least one of these copolymers, the content of the copolymer included in the composite PTC binding material may exceed 50 mass% and is preferably from 1 to 75 mass%.

The composite PTC binding material according to the present embodiment is preferably prepared as a mixture obtained by dissolving polyvinylidene fluoride (PVDF) as the binding component and a PTC functionality-imparting component in a common solvent that dissolves both components together, followed by precipitation by solvent substitution. This is because in the composite PTC binding material prepared by this method, the binding component and the PTC functionality-imparting component are present in a state in which the binding component and the PTC functionality-imparting component are uniformly mixed at the molecular level.

In another embodiment, a powder mixture of polyvinylidene fluoride (PVDF) and a PTC functionality-imparting component may be prepared by mixing with a powder mixer such as a ball mill or a rocking mixer or a known crushing device. This is because the mixture easily becomes uniform, to thus form the composite PTC binding material, in the electrolyte solution or in the solvent used in the preparation of the electrode mix layer.

### [Action]

In a non-aqueous electrolyte secondary battery produced using the composite PTC binding material according to the present invention, the exothermal behavior of the battery is changed by the mixing of the binding component with the PTC functionality-imparting component, and rapid heat generation is inhibited. While the mechanism of action for this is not necessarily clear, it is conceivable, for example, that this is because when a sudden temperature rise occurs in an electrode mix layer due to a short circuit or the like, the composite PTC binding material inside the battery melts, the structure of the electrode mix layer bonded thereby changes, and conduction paths are severed, as a result of which the short circuit current is reduced and the speed of heat generation is reduced. This heat generation inhibiting action is very closely linked to the lowering of the melting start temperature of the composite PTC binding material shown in the following examples. By using the binding material composition having a reduced melting start temperature, PTC functionality can be imparted to the component element of the battery.

### [Electrode for non-aqueous electrolyte secondary battery]

The electrode for the non-aqueous electrolyte secondary battery according to the present embodiment is provided with an electrode mix layer including an electrode active material capable of insertion and extraction of lithium, a conductive auxiliary agent, and the above-described composite PTC binding material. In addition, the electrode for the non-aqueous electrolyte secondary battery preferably has the electrode mix layer on one or both surfaces of a current collector. While the average thickness of the electrode mix layer is not particularly limited, it is preferably from 5 to 100 µm per one surface of the current collector, and more preferably from 10 to 50 µm.

The electrode for the non-aqueous electrolyte secondary battery is not limited as long as the electrode is provided with at least the above-described electrode mix layer, and the electrode for the non-aqueous electrolyte secondary battery may be a positive electrode or a negative electrode. That is, in a case in which the active material configuring the electrode mix layer is the positive electrode active material described below, the electrode for the lithium secondary battery functions as a positive electrode. However, in a case in which the active material configuring the electrode mix layer is the negative electrode active material described below, the electrode for the lithium secondary battery functions as a negative electrode. As the electrode for the non-aqueous electrolyte secondary battery according to the present embodiment, a positive electrode in which the active material included in the electrode mix layer is the positive electrode active material, is preferable.

### (Current collector)

While any kind of current collector may be used in the present embodiment, a metal or an alloy is usually used. Specifically, examples of a positive electrode current collector include aluminum, nickel and SUS, and examples of a negative electrode current collector include copper, nickel and SUS.

### (Other components)

The electrode mix layer with which the electrode for the non-aqueous electrolyte secondary battery according to the present exemplary embodiment is provided, may include suitable components used for the production of an electrode mix layer, in addition to the above-described electrode active material. For example, in a case in which the electrode mix layer is formed from a mix slurry, the electrode mix layer may includes ingredient components derived from the mix slurry. Examples of such ingredient components derived from the mix slurry include other additives such as a thickening agent, a surfactant agent, a dispersant, a wetting agent, and an antifoam agent.

### (Method of forming electrode mix layer)

The mix layer, with which the electrode for the non-aqueous electrolyte secondary battery according to the present invention is provided, can be produced by coating an electrode mix slurry, including the above-described electrode active material, conductive auxiliary agent, and composite PTC binding material, onto a surface of a current collector, and drying the same. In such a case, it is preferable to form the electrode mix slurry by dispersing the electrode active material and conductive auxiliary agent in a solution obtained by dissolving the above-described composite PTC binding material in a solvent. The amount of the composite PTC binding material included in the electrode mix slurry can be, for example, approximately from 1 to 10 mass% of the total of solid components. When the content of the composite PTC binding material is less than 1 mass%, the effect with respect to severing of conduction paths at the time of temperature increase of the mix layer, is diminished. Further, since the composite PTC binding material generally exhibits electrical insulation properties, when the content of the composite PTC binding material is more than 10 mass%, contact resistance inside the mix layer increases and battery capacity is diminished, which is undesirable.

The solvent included in the mix slurry can be the common solvent used in the preparation of the above-described composite PTC binding material, and can be selected from aprotic polar solvents such as N-methyl pyrrolidone, dimethyl sulfoxide, propylene carbonate, dimethyl formamide, and γ-butyrolactone, or mixed solutions thereof.

In terms of coating and drying the mix slurry on a current collector, the methods of coating and drying are not particularly limited. Examples include slot-die coating, slide coating, curtain coating and gravure coating. Examples of the drying method include drying by warm air, hot air or low humidity air, vacuum drying and drying methods using (far) infrared or the like. While the drying time and drying temperature are not particularly limited, the drying time is usually from 1 minute to 30 minutes and the drying temperature is usually from 40°C to 180°C

In the method of producing the mix layer, after coating and drying the above-described mix slurry on a current collector, the method preferably includes a process of reducing the porosity of the active material layer by pressurization treatment using a die press or a roll press.

### (Electrolyte solution)

As the electrolyte solution, for example, electrolyte solutions that are usually used in lithium ion secondary batteries are preferable. Specifically, the electrolyte solution may be a solution in which a supporting salt (lithium salt) is dissolved in an organic solvent. Examples of the lithium salt include at least one kind of lithium salt or the like selected from inorganic acid anion salts such as lithium hexafluorophosphate (LiPF₆), lithium tetrafluoroborate (LiBF₄), lithium perchlorate (LiClO₄), lithium hexafluoroarsenate (LiAsF₆), lithium hexafluorotantalate (LiTaF₆), lithium tetrachloroaluminate (LiAlCl₄), and lithium decachlorodecaborate (Li₂B₁₀Cl₁₀), and organic acid anion salts such as lithium trifluoromethane sulfonate (LiCF₃SO₃), lithium bis(trifluoromethane sulfonyl)imide (Li(CF₃SO₂)₂N), and lithium bis(pentafluoroethane sulfonyl)imide (Li(C₂F₅SO₂)₂N). Among these, lithium hexafluorophosphate (LiPF₆) is preferable.

Further, as the organic solvent, at least one organic solvent selected from the group consisting of cyclic carbonates, fluorine-containing cyclic carbonates, chain carbonates, fluorine-containing chain carbonates, aliphatic carboxylic acid esters, fluorine-containing aliphatic carboxylic acid esters, γ-lactones, fluorine-containing γ-lactones, cyclic ethers, fluorine-containing cyclic ethers, chain ethers, and fluorine-containing chain ethers, can be used, for example.

Examples of cyclic carbonates include propylene carbonate (PC), ethylene carbonate (EC), and butylene carbonate (BC). Further, examples of fluorine-containing cyclic carbonates include fluoroethylene carbonate (FEC). In addition, examples of chain carbonates include dimethyl carbonate (DMC), diethyl carbonate (DEC), ethyl methyl carbonate (EMC), methyl propyl carbonate (MPC), ethyl propyl carbonate (EPC), and dipropyl carbonate (DPC). Further, examples of aliphatic carboxylic acid esters include methyl formate, methyl acetate, and ethyl propionate. In addition, examples of γ-lactones include γ-butyrolactone. Further, examples of cyclic ethers include tetrahydrofuran, 2-methyl tetrahydrofuran, and 1,4-dioxane. In addition, examples of chain ethers include 1,2-ethoxyethane (DEE), ethoxymethoxyethane (EME), diethyl ether, 1,2-dimethoxyethane, and 1,2-dibutoxyethane. Other examples include nitriles such as acetonitrile and amides such as dimethyl formamide. Of these, one organic solvent may be used singly or two or more organic solvents may be used in combination.

Additives such as organic sulfone compounds such as sultone derivatives and cyclic sulfonate esters, organic disulfone compounds such as disultone derivatives and cyclic disulfonate esters, vinylene carbonate derivatives, ethylene carbonate derivatives, ester derivatives, dihydric phenol derivatives, ethylene glycol derivatives, terphenyl derivatives, and phosphate derivatives, may be added to the electrolyte solution. These additives form a film on the surface of the negative electrode active material, reduce the generation of gas in a battery and, further, can achieve an improvement in capacity retention ratio.

Examples of organic sulfone compounds include 1,3-propane sulfone (saturated sultone), and 1,3-propene sultone (unsaturated sultone). Further, examples of organic disulfone compounds include methane disulfonic acid methylene ester. Examples of vinylene carbonate derivatives include vinylene carbonate (VC). Further, examples of ethylene carbonate derivatives include fluoroethylene carbonate (FEC). In addition, examples of ester derivatives include 4-biphenylyl acetate, 4-biphenylyl benzoate, 4-biphenylyl benzyl carboxylate, and 2-biphenylyl propionate. Further, examples of dihydric phenol derivatives include 1,4-diphenoxy benzene and 1,3-diphenoxy benzene. In addition, examples of ethylene glycol derivatives include 1,2-diphenoxyethane, 1-(4-biphenylyloxy)-2-phenoxyethane, and 1-(2-biphenylyloxy)-phenoxyethane. Further, examples of terphenyl derivatives include o-terphenyl, m-terphenyl, p-terphenyl, 2-methyl-o-terphenyl, and 2,2-dimethyl-o-terphenyl. In addition, examples of phosphate derivatives include triphenyl phosphate.

Examples of separators include microporous film or porous flat plates formed from polyolefins such as polyethylene (PE) and polypropylene (PP) and, additionally, non-woven fabrics.

Examples of polymer gel electrolytes include a polymer gel electrolyte in which a polymer for forming a polymer gel electrolyte and an electrolyte solution are included in conventionally-known ratios. For example, from the viewpoint of ion conductivity and the like, the ratios are preferably from, approximately, several mass% to 98 mass%.

Polymer gel electrolytes usually have a configuration in which the above-described electrolyte solution usually used in a lithium ion secondary battery is contained in a solid polymer electrolyte having ion conductivity. However, the polymer gel electrolytes are not limited thereto and may have a configuration in which the above-described electrolyte solution is held in a skeleton of a polymer that does not have ion conductivity. As regards the thickness of the electrolyte layer, a thinner layer is preferable from the viewpoint of reducing internal resistance. The thickness of the electrolyte layer is usually from 1 to 100 µm and is preferably from 5 to 50 µm.

### [Action]

The non-aqueous electrolyte secondary battery according to the present invention, as specifically shown in the following examples, exhibits changed heat generation behavior of the battery in a nail piercing test, and inhibits heat generation at a short circuit portion. While the mechanism behind this action is not necessarily clear, it is conceivable that the composite PTC binding material inside the electrode mix layer melts owing to a rapid temperature rise at the short circuit portion of the non-aqueous electrolyte secondary battery, whereby structural change occurs inside the electrode mix layer and conduction paths are severed, as a result of which short circuit current is reduced and heat generation is inhibited.

### [Positive electrode for lithium ion secondary battery]

In another embodiment of the present invention, Fig. 3 is a schematic view showing a positive electrode in a case in which an internal short circuit has occurred due to piercing by a nail. Positive electrode 310 for a lithium ion secondary battery shown in Fig. 3 has positive electrode mix layer 314 on one surface of current collector 313. This positive electrode mix layer 314 includes a positive electrode active material capable of insertion and extraction of lithium, a conductive auxiliary agent, a binding component, and, optionally, a PTC functionality-imparting component, and is formed from two layers: layer A 311 and layer B 312. Positive electrode mix layer 314 may be coated on at least one surface of current collector 313, and, in some cases, may be coated on both surfaces of current collector 313. Further, in other embodiments, one or more intermediate layers may be provided.

The positive electrode material, conductive auxiliary agent, and binding component included in layer A 311 may be the same as or different from the positive electrode material, conductive auxiliary agent, and binding component included in layer B 312, respectively. Layer A 311 and layer B 312 are preferably formed from the same components and compositions from the viewpoint of securing the uniformity of the positive electrode mix layer. Further, the PTC functionality-imparting component that configures the binding material together with the binding component should be included in at least layer B 312, and layer A 311 may either not include a PTC functionality-imparting agent or may include a PTC functionality-imparting component at lower concentration than layer B. The concentration of the PTC functionality-imparting component in a particular layer refers to the mass ratio of the PTC functionality-imparting component included in the layer relative to the total mass of the layer. From the viewpoint of battery properties, the binding material included in layer A is preferably formed from the binding component alone, and, for example, is polyvinylidene fluoride (PVDF). Further, while the concentration of the PTC functionality-imparting component in layer B is not particularly limited as long as it can contribute to the severance of conduction paths between current collector 313 and positive electrode mix layer 314 at a time of an internal short circuit, the concentration is typically from 0.5 to 5 mass%, and preferably from 1 to 3 mass%, relative to the total mass of layer B.

As shown in Fig. 3, at a time of an internal short circuit due to piercing by a nail, when nail 315, which has penetrated the negative electrode and assumed negative electrode potential, penetrates positive electrode mix layer 314, a large amount of heat energy is emitted at positive electrode current collector 313 or at the boundary portion between positive electrode current collector 313 and positive electrode mix layer 314. Therefore, it is conceivable that reducing the speed of heat generation by increasing the resistance of this portion (layer B 312) at a time of heat generation is important in terms of suppression of thermal runaway of the battery as a whole.

While the average thickness of layer B 312 is not particularly limited, the average thickness of layer B 312 is preferably from 5 to 30 µm per one surface of the current collector, and further preferably from 10 to 20 µm per one surface of the current collector. Further, while the average thickness of layer A can be appropriately adjusted based on the average thickness of the positive electrode mix layer as a whole, the average thickness of layer A can usually be from 5 to 20 times, and preferably from 10 to 15 times, the average thickness of layer B, and the average thickness of layer A per one surface of the current collector is preferably from approximately 30 µm to approximately 100 µm.

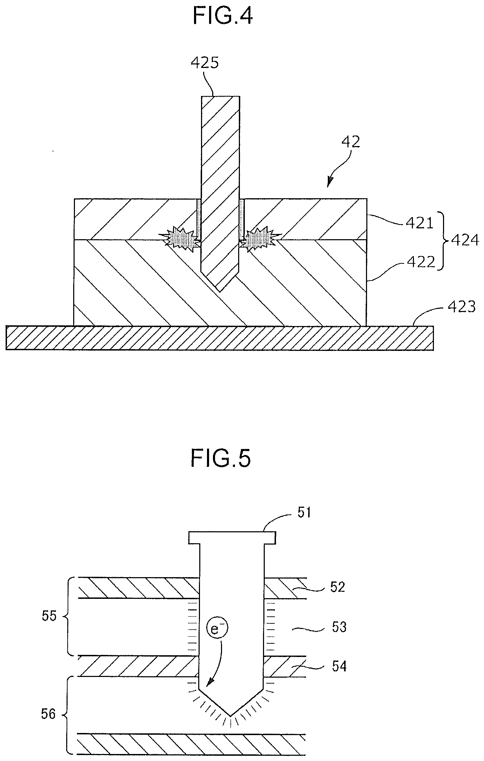

Fig. 4 is a sectional view of a positive electrode at a time of an internal short circuit due to piercing by a nail in yet another embodiment. Similarly to Fig. 3, positive electrode 420 for a lithium ion secondary battery shown in Fig. 2 has positive electrode mix layer 424 at one surface of current collector 423, and positive electrode mix layer 424 includes a positive electrode active material capable of insertion and extraction of lithium, a conductive auxiliary agent, a binding component, and, optionally, a PTC functionality-imparting component, and is formed from two layers: layer A 422 and layer B 421. The specifics of the positive electrode active material, conductive auxiliary agent, and binding component included in layer A 422 and layer B 421 are the same as those in the case of Fig. 3. Further, in the present embodiment, the PTC functionality-imparting component that configures the binding material together with the binding component is included in layer B 421. That is, the binding material included in layer A 422 may contain only the binding component, or may include a PTC functionality-imparting component at lower concentration than layer B. In Fig. 4, even in a case in which a short circuit due to nail piercing does not penetrate positive electrode mix layer 424, at the moment at which nail 425, which has penetrated the negative electrode and assumed negative electrode potential, contacts the positive electrode, a large electric current flows at the surface of this positive electrode and large Joule heat is generated, and as a result of this heat, the positive electrode initiates thermal decomposition whereby a large amount of energy is emitted and thermal runaway occurs. In consideration of the above, in the present embodiment, a PTC functionality-imparting component is added to the binding material included in layer B 421 in positive electrode mix layer 424, so that the resistance of this portion increases at a time of heat generation, thereby lowering the speed of heat generation and suppressing thermal runaway of the battery as a whole. Regarding the average thickness of layer B 421, the same applies as for the average thickness of the above-described layer B 312.

While the mechanism by which the resistance of the above-described specified portion of the positive electrode mix layer is increased by adding the PTC functionality-imparting component to layer B 312 and layer B 421 is not necessarily clear, owing to rapid temperature increase at a short circuit portion of a lithium ion secondary battery, the binding material (mixture of binding component and PTC functionality-imparting component) inside the positive electrode mix layer at this portion melts. At this time, it is inferred that the binding material forms a structure having a fibrillary (fiber) form, in which the positive electrode active material and the conductive auxiliary agent, which are inorganic substances, are convoluted therewith, whereby the localized structure of the positive electrode mix layer changes, at least some conduction paths within the positive electrode mix layer are severed, and the resistance of this portion increases. Considering that this kind of functionality is exhibited owing to a reduction in the melting start temperature and/or the melting peak temperature of the binding material, the binding material of the present embodiment features a lower melting start temperature and/or melting peak temperature than the binding component used singly as normal. Further, since the battery temperature is controlled by the balance between heat generation and heat emission, it is conceivable that thermal runaway of the battery can be suppressed by reducing the speed of heat generation by increasing the resistance at an initial stage of heat generation due to an internal short circuit.

Next, the lithium ion secondary battery according to the present invention is explained in detail from the viewpoint of the action thereof at the time of heat generation. The lithium ion secondary battery according to one embodiment of the present invention includes a positive electrode, and/or a negative electrode, including a conductive auxiliary agent, a binding material, and an electrode active material that includes one or more materials selected from the group of materials capable of insertion and extraction of a lithium ion. The above-described binding material includes polyvinylidene fluoride (PVDF) as a binding component, and a melting point depressant, and is characterized by having a lower melting start temperature and/or melting peak temperature of the binding material as measured by differential scanning calorimetry in the presence of a non-aqueous electrolyte than in a case in which the binding material includes only the polyvinylidene fluoride.

### (Binding material)

The binding material includes polyvinylidene fluoride (PVDF), which is a binding component, and a melting point depressant. The aim of using a binding component for manufacturing an electrode is, firstly, to ensure the adhesion of a powder-form active material without substantially covering over an active material surface that is electrochemically active. This effect depends on the wettability of the binding component. Further, the binding component needs to have adhesiveness with respect to the current collector metal, and this is achieved by the presence of a polar group in the binding component. Further, the binding component needs to have sufficient flexibility as regards the handling of the electrode and needs to be able to respond to dimensional changes in an active material during a charging and discharging cycle. The binding component should be provided with specific electrochemical properties and should have compatibility with the non-aqueous electrolyte solution that is used. Finally, since reducing agents and oxidizing agents that are used as active materials are extremely powerful, the binding component should have the minimum possible reactivity so as to be able to endure extreme operation conditions without deterioration.

While the mechanical attributes and electrochemical attributes of PVDF are suitable for the above-described multiple aims required of the binding component, the binding component is not limited to PVDF and other binding agents may be used. In the present invention, a combination of PVDF, which is a binding agent, and a melting point depressant that can effectively reduce the melting point of PVDF is preferable, and, for example, a large number of combinations that are conventionally known and are recognized as having a melting point reduction action, can be applied. In the following, documents are listed that disclose researches related to the compatibility (melting temperature depression phenomenon of a blend system) of PVDF/PMMA (polymethyl methacrylate) and PVDF/PVAc (polyvinyl acetate).
Document 1: KOBAYASHI Satoru, TASAKA Shigeru, et al., KOBUNSHIRONBUNSHU (Japanese Journal of Polymer Science and Technology), Vol. 44, No. 9, pp. 695-699 (1987).
Document 2: YASUI Eiji, YOSHIKAWA Hitoshi, Nihon Gomu Kyoukai-shi (Journal of the Society of Rubber Science and Technology, Japan), Vol. 66, No. 11, pp. 800-811 (1993).
Document 3: HANADA Tomomi, ANDO Minoru, Tokyo Kasei Gakuin Daigaku Kiyou (Journal of Tokyo Kasei Gakuin University), No. 34, pp. 31-34 (1994).
Document 4: HANADA Tomomi, ANDO Minoru, Tokyo Kasei Gakuin Daigaku Kiyou (Journal of Tokyo Kasei Gakuin University), No. 35, pp. 93-98 (1995).
Document 5: HANADA Tomomi, ANDO Minoru, Tokyo Kasei Gakuin Daigaku Kiyou (Journal of Tokyo Kasei Gakuin University), No. 36, pp. 71-74 (1996).
Document 6: HORIBE Hideo, BABA Fumiaki, et al., Nihon Kagakukai-shi (Journal of the Chemical Society of Japan), No. 2, pp. 121-126 (2000).
Document 7: HANADA Tomomi, ANDO Minoru, Tokyo Kasei Gakuin Daigaku Kiyou (Journal of Tokyo Kasei Gakuin University), No. 41, pp. 77-80 (2001).
Document 8: SAITO Taku, TOYODA Akinori, KOBUNSHI RONBUNSHU (Japanese Journal of Polymer Science and Technology), Vol. 68, No. 6, pp. 353-369 (2011).

While it has been reported that the melting point of the PVDF adopted in the present embodiment is approximately 180°C when used singly, it is conceivable that this melting point is slightly lowered in a lithium ion secondary battery owing to contact with a non-aqueous electrolyte. In addition, by including a melting point depressant, the binding material of the present embodiment melts at a time of temperature increase of the lithium ion secondary battery, thereby increasing the resistance of the electrode mix layer from a lower temperature region, whereby thermal runaway of the lithium ion secondary battery can be suppressed. In the binding material according to the present invention, owing to inclusion of a melting point depressant, either the melting start temperature or the melting peak temperature, or both, is lower than that of PVDF alone. From the viewpoint of suppression of thermal runaway, it is preferable that the melting start temperature and/or the melting peak temperature of the binding material is low; however, if excessively low, the functionality of the binding material is inhibited, which is undesirable. As a result, the melting start temperature of the binding material is preferably from approximately 60°C to approximately 150°C, more preferably from approximately 65°C to approximately 130°C, and yet more preferably from approximately 70°C to approximately 100°C.

There are cases in which the melting peak temperature (melting point) of the binding material is also lowered, and under the above-described measurement conditions, the melting peak temperature of the binding material is preferably from 70°C to 130°C. It is preferable, in terms of thermal stability, that the melting peak temperature of the binding material is 70°C or higher. Further, from the viewpoint of safety, the melting temperature of the binding material is preferably 130°C or lower, more preferably lower than 130°C, yet more preferably 120°C or lower, and still further preferably 110°C or lower.

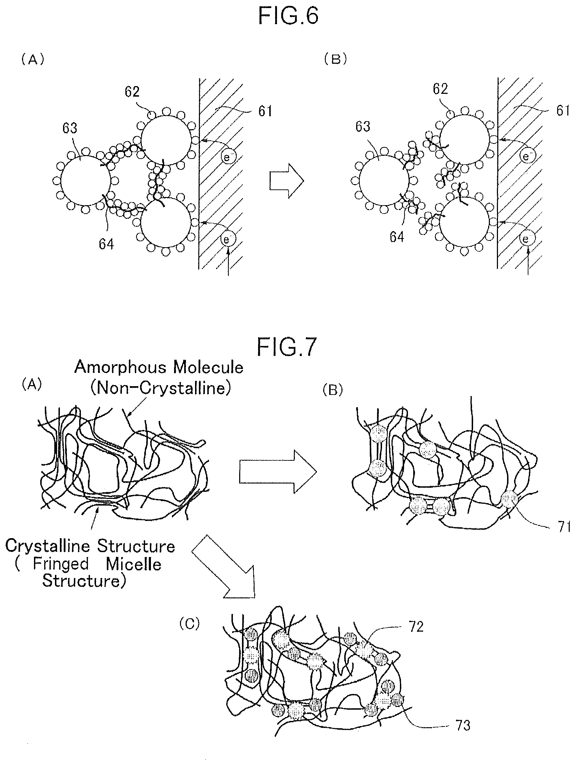

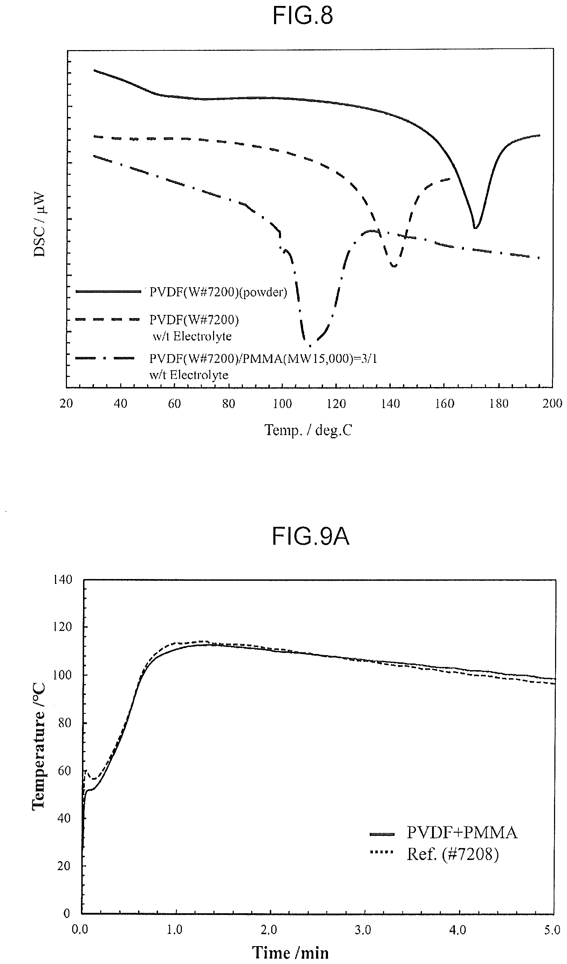

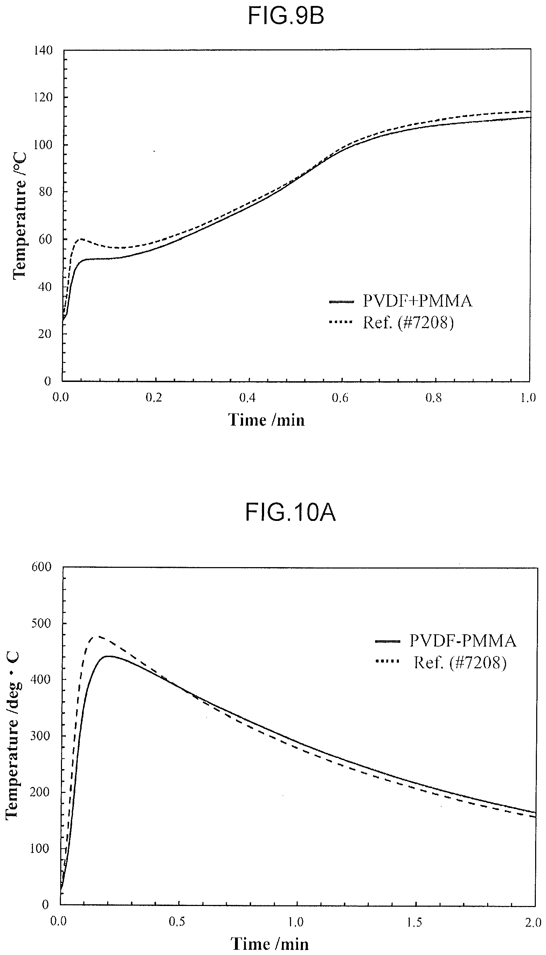

The "melting point depressant" in the present embodiment refers to a component that lowers the melting point of the binding material by lowering the melting start temperature and/or the melting peak temperature of the above-described PVDF. It is conceivable that the relationship between the melting of PVDF in conjunction with temperature increase, and the interruption of conductivity, is as follows. Fig. 5 is a schematic diagram showing a state in which a lithium ion secondary battery of the embodiment is pierced by a nail, which is a conductive foreign substance, and Fig. 6 is a schematic diagram showing a relationship between an electrode active substance and a binding material in the embodiment. It is inferred that, as shown in Fig. 6(A), the binding material forms a structure having a fibrillary (fiber) form in which the electrode active material and the conductive auxiliary agent, which are inorganic substances, are convoluted therewith, and that this structure forms conduction paths between the electrode active material and the nail. If, in a fully charged state (SOC 100%), an electrode, configured by an electrode active material and a conductive auxiliary agent that are bonded together, is pierced by a nail and short-circuited, electrons flow from the negative electrode to the positive electrode via the nail. In this way, since, at the moment at which an internal short circuit occurs, there is an electrical discharge in units of several hundreds of C, the nail immediately generates heat and becomes a heat generating body, and the temperature of the electrode, principally at the periphery of the nail, rises. It is inferred that, at this time, since, as shown in Fig. 6(B), the binding material at a portion peripheral to the nail melts and at least some conduction paths inside the electrode are severed, the resistance at the periphery of the nail increases. However, the structure of the mix layer (a network that forms conduction paths) is complex and irregular, and localized and uneven conduction paths are not completely severed; nevertheless, the resistance between the nail and the electrode can be effectively increased. Below, this functionality is described as a localized resistance enhancement function. Since this kind of localized resistance enhancement function can more effectively perform severance when the melting start temperature and/or the melting peak temperature of the binding material is lowered, the binding material of the present embodiment has a lower melting start temperature and/or a lower melting peak temperature by including a melting point depressant, as compared to that of the binding component that is used alone as normal. Further, since the localized resistance enhancement function is exhibited by utilizing heat generation from a conductive foreign substance such as a nail (refer to the heat generation profiles shown in Figs. 9, 10 and 11, which are discussed below), the peak temperature at the initial stage of heat generation, in particular, can be reduced. Since the possibility of actual flame ignition increases the higher the peak temperature at the initial stage of heat generation, the possibility of actual flame ignition can be effectively reduced by reduction of the peak temperature.

Accordingly, the binding material of the present embodiment may be obtained by mixing PVDF, which is a binding component, and a melting point depressant, measuring the resultant mixture by differential scanning calorimetry in the presence of a non-aqueous electrolyte, and selecting a mixture that exhibits a decreased melting start temperature and/or a decreased melting peak temperature as compared to the case of measuring PVDF alone under the same conditions. The method of measuring the melting start temperature has already been explained. In the present embodiment, explanation has been provided using a nail that has penetrated from the exterior; however, the same applies in cases of short circuit heat generation in which a conductive foreign substance, which is commingled in the vicinity of the separator, pierces the separator at a time of pressurization.

In the present embodiment, the reason that melting point depressants formed from this kind of compatible material lower the melting point of PVDF is surmised to be that the fact that these additives have electrical properties (polarities) derived from a carbonyl group or a cyano group strengthens the interaction with PVDF and exhibits the melting point lowering action. Fig. 7 is a schematic diagram showing the relationship between the binding agent and the melting point depressant in the embodiment. As shown in the upper-left area of Fig. 7, in a cluster state of a PVDF polymer chain, while respective polymers chains are randomly intertwined and exist as non-crystalline amorphous molecules, a crystalline structure (fringed micelle structure) of locally ordered orientation and dense arrangement also exists. A cluster of this PVDF polymer chain (binding agent), by intertwining together with the electrode active material and the conductive auxiliary agent, which are inorganic substances, forms a fibrillary structure (conduction paths) at the surfaces of electrode active material particles and between the particles. At such time, it is conceivable that the crystalline structure of locally ordered orientation and dense arrangement secures the structural stability of the conduction paths and attributes (melting point). When a melting point depressant uniformly mixes in this crystalline structure, a polymer chain cluster is formed in which the orientation is readily deregulated. As a result, it is conceivable that by readily melting at a time of increased temperature and transitioning to a non-crystalline amorphous molecule, while also maintaining a certain extent of structural stability, points of contact between the electrode active material and the conductive auxiliary agent convoluted inside the fibrillary structure are actively released, and conduction paths are severed, thereby increasing electrical resistance.

It should be noted, by way of supplementary explanation, that the action due to the melting point depressant, and severance due to swelling of the PVDF polymer chains, are different actions. For example, with reference to the swollen state of the PVDF polymer chains as shown in Fig. 7, a case is explained in which an electrolyte solution including lithium hexafluorophosphate (LiPF₆) as the electrolyte, and ethylene carbonate (EC) and diethyl carbonate (DEC) as solvents, is used. In the crystalline structure of a PVDF polymer chains, it is conceivable that the PVDF polymer chains extend when the crystalline structure expands. Accordingly, the points of contact between the electrode active material and the conductive auxiliary agent convoluted inside the fibrillary structure are not actively released, and the action is simply such that relative distances between electrode active material particles and between conductive auxiliary agents are increased, and the effect with respect to increasing resistance is limited. In this way, it is conceivable that there is a certain difference between the actions and effects of a melting point depressant and of a swellable particle.

Upon instantaneous temperature increase in conjunction with short circuit heat generation, the lithium ion secondary battery according to the present invention, being provided with a melting point depressant for the binding component, can effectively melt the binding material forming conduction paths, particularly at peripheral regions surrounding a foreign substance that can be turned into a heat generating body by a localized short circuit, and can sever conduction paths. Therefore, it is possible to increase the resistance at conduction paths between the conductive foreign substance and the electrode, and to improve safety by suppressing thermal runaway of the lithium ion secondary battery.

### EXAMPLES

[Measurement of melting point of composite PTC binding material by DSC in presence of non-aqueous electrolyte]

### <PVDF chart>

Types and attributes of the PVDF used as the binding component are shown in the following Table 1.

**Table 1**

| Manufacturer | Product name | | Characteristics | |
|---|---|---|---|---|
| KUREHA | PVDF | W#7200 | Medium viscosity | High molecular weight |
| | | W#7300 | High viscosity | Super high molecular weight |
| | | W#9300 | Medium viscosity | Modified super high molecular weight |
| ARKEMA | PVDF | KYNAR 711 | Low viscosity | Low molecular weight |
| | | KYNAR 761 | Medium viscosity | Medium molecular weight |
| | | HSV 900 | High viscosity | High molecular weight |
| Solvay | PVDF | Solef 5130 | High viscosity | Super high molecular weight, functionalized |

### <PTC functionality-imparting agent chart>

A chart of compounds used as the PTC functionality-imparting compound is shown in the following Table 2.

**Table 2**

| Product name | Chemical name | Cas. No. | Molecular weight g/mol |
|---|---|---|---|
| BMI-1000 | 4,4'-diphenylmethane bismaleimide | 13676-54-5 | 358.35 |
| BMI-2300 | phenylmethane maleimide | 67784-74-1 | 321.42 |
| BMI-3000 | m-phenylmethane maleimide | 3006-93-7 | 268.22 |
| BMI-4000 | 2,2'-bis[4-(4-maleimidophenoxy)phenyl]propane | 79922-55-7 | 570.60 |
| BMI-5100 | 3,3'-dimetyl-5,5'-diethyl-4,4'-diphenymethane bismaleimide | 105391-33-1 | 442.52 |
| BMI-7000 | 4-methyl-1,3-phenylene bismaleimide | 6422-83-9 | 282.25 |
| | | | |

| Product name | Chemical name | Cas. No. | Molecular weight g/mol |
|---|---|---|---|
| MAA | methacrylic acid | 79-41-4 | 86.09 |
| AA | acrylic acid | 79-10-7 | 72.06 |
| PMMA | poly methyl methacrylate | 9011-14-7 | 15,000 |
| | | | 350,000 |
| PMA | poly methyl acrylate | 9003-21-8 | 40,000 |
| | | | - |
| PVAc | polyvinyl acetate | 9003-20-7 | 100,000 |
| | | | 500,000 |
| | | | |

| Manufacturer | Product name | | Characteristics |
|---|---|---|---|
| ARKEMA | PVDF-HFP | 2851 | Low HFP content |
| | | 2801 | Medium HFP content |
| | | 2751 | High HFP content |

### <Sample preparation>

PVDF was mixed with various PTC functionality-imparting compounds (powders) at predetermined proportions for approximately 15 minutes using an agate mortar. For example, in a case in which the mixing ratio of the PVDF (powder) and the PTC functionality-imparting compound (powder) was 1:1, 0.1 g of each was weighed out and mixed together. This mixed powder was vacuum dried at ordinary temperature (25°C) for at least 10 hours.

3 mg of the above-described sample was weighed out and placed in an SUS-PAN for DSC measurement that had been weighed in advance. Next, 6 mg of an electrolyte solution (1M-LiPF₆ / 3EC7EMC) was added to the above-described SUS-PAN (weight ratio of powder : electrolyte solution = 1:2). At this time, it was visually confirmed that approximately all of the powder was immersed in the liquid. A cover (weight-measured in advance) was promptly set (then weight-measured) and hermetically sealed with a dedicated press.

### <Measurement>

Using a DSC7000X high-sensitivity differential scanning calorimeter manufactured by Hitachi High-tech Science Corporation, the melting temperature was measured under the conditions of a scanning speed of 5°C/minute, and from room temperature to 210°C.

### <Results>

Table 3 shows examples of DSC measurement results for PVDF alone (manufacturer; product name).

**Table 3**

| Manufacturer | Product No. | Mass% | Melting temperature | |
|---|---|---|---|---|
| | | | Start temperature (°C) | Peak temperature (°C) |
| KUREHA | W#7200 | 100 | 95 | 135 |
| | W#7300 | 100 | 90 | 128 |
| | W#9300 | 100 | 88 | 130 |
| ARKEMA | KYNAR 711 | 100 | 92 | 100 |
| | KYNAR 761 | 100 | 87 | 95 |
| | HSV 900 | 100 | 80 | 95 |
| Solvay | Solef 5130 | 100 | 90 | 140 |

Table 4 shows melting start temperatures and melting peak temperatures (melting points) in a case in which 75 weight% of the binding component (PVDF) and 25 weight% of the PTC functionality-imparting component were mixed, and in a case in which 50 weight% of the binding component (PVDF) and 50 weight% of the PTC functionality-imparting component were mixed.

**Table 4**

| Binding material | | | | | Melting point | |
|---|---|---|---|---|---|---|
| PVDF | % | [X] | | % | Start temp. deg.C | Peak temp. deg.C |
| KUREHA 7200 | 75 | BMI-1000 | | 25 | 88 | 127 |
| | 75 | BMI-2300 | | 25 | 88 | 132 |
| | 75 | BMI-4000 | | 25 | 88 | 132 |
| | 75 | PMMA | 15,000 | 25 | 95 | 107 |
| | 75 | PMMA | 350,000 | 25 | 90 | 130 |
| | 75 | PMA | 40,000 | 25 | 80 | 125 |
| | 75 | PAA | 20,000 | 25 | 78 | 121 |
| | 75 | PVAc | 100,000 | 25 | 87 | 125 |
| | 75 | PVAc | 500,000 | 25 | 90 | 130 |
| | 50 | PVDF-HFP (2851) | | 50 | 72 | 108 |
| | 50 | PVDF-HFP (2801) | | 50 | 72 | 110 |
| | 50 | PVDF-HFP (2751) | | 50 | 74 | 112 |
| KUREHA 7300 | 75 | BMI-1000 | | 25 | 86 | 125 |
| | 75 | BMI-2300 | | 25 | 86 | 127 |
| | 75 | BMI-4000 | | 25 | 86 | 127 |
| | 75 | PMMA | 15,000 | 25 | 82 | 118 |
| | 75 | PVAc | 500,000 | 25 | 85 | 125 |
| | 50 | PVDF-HFP (2851) | | 50 | 70 | 106 |
| | 50 | PVDF-HFP (2801) | | 50 | 70 | 108 |
| | 75 | PVDF-HFP (2751) | | 25 | 72 | 110 |
| KUREHA 9300 | 75 | PMMA | 15,000 | 25 | 83 | 120 |
| | 75 | PVAc | 500,000 | 25 | 83 | 125 |
| | 50 | PVDF-HFP (2851) | | 50 | 69 | 103 |
| | 50 | PVDF-HFP (2801) | | 50 | 69 | 105 |
| | 75 | PVDF-HFP (2751) | | 25 | 71 | 107 |
| KUREHA 9700 | 75 | PMMA | 15,000 | 25 | 80 | 120 |
| | 75 | PVAc | 500,000 | 25 | 83 | 125 |
| | 50 | PVDF-HFP (2851) | | 50 | 48 | 105 |
| | 50 | PVDF-HFP (2801) | | 50 | 46 | 103 |
| | 75 | PVDF-HFP (2751) | | 25 | 52 | 106 |
| ARKEMA KYNAR 761 | 75 | BMI-1000 | | 25 | 80 | 105 |
| | 75 | PMMA | 15,000 | 25 | 77 | 88 |
| | 75 | PVAc | 500,000 | 25 | 77 | 90 |
| | 50 | PVDF-HFP (2851) | | 50 | 71 | 88 |
| | 75 | PVDF-HFP (2751) | | 25 | 73 | 89 |
| ARKEMA KYNAR 711 | 75 | BMI-1000 | | 25 | 81 | 113 |
| | 75 | PMMA | 15,000 | 25 | 77 | 95 |
| | 75 | PVAc | 500,000 | 25 | 82 | 98 |
| | 50 | PVDF-HFP (2851) | | 50 | 81 | 101 |
| | 75 | PVDF-HFP (2751) | | 25 | 81 | 100 |
| HSV-900 | 75 | BMI-1000 | | 25 | 92 | 118 |
| | 75 | PMMA | 15,000 | 25 | 80 | 95 |
| | 50 | PVAc | 500,000 | 50 | 78 | 95 |
| | 50 | PVDF-HFP (2851) | | 50 | 77 | 98 |
| | 75 | PVDF-HFP (2751) | | 25 | 77 | 100 |
| Solef 5130 | 75 | PMMA | 15,000 | 25 | 90 | 128 |
| | 75 | PVAc | 500,000 | 25 | 90 | 130 |
| | 50 | PVDF-HFP (2851) | | 50 | 85 | 125 |
| | 75 | PVDF-HFP (2751) | | 25 | 87 | 128 |
| ARKEMA | FLEX2501 (PVDF-HFP) | | | | 55 | 110 |
| | FLEX2751 (PVDF-HFP) | | | | 51 | 98 |
| | FLEX2801 (PVDF-HFP) | | | | 46 | 90 |
| | FLEX2851 (PVDF-HFP) | | | | 49 | 92 |

As shown in Tables 3 and 4, it is understood that the above-described mixtures of PVDF and a PTC functionality-imparting component start melting from approximately 70°C and have peak temperatures of approximately from 90°C to 130°C. Further, Fig. 8 shows a DSC chart of a powder body sample of PVDF W#7200 shown in Table 3 (solid line), or a sample in which PVDF W#7200 is combined with an electrolyte (dotted line), and a sample of PVDF W#7200 to which 25% of PMMA has been added (fourth line from the top of Table 4). From the results shown in Fig. 8, it is understood that the melting start temperature and melting point of the PVDF that is the binding component is clearly reduced by the addition of a PTC functionality-imparting agent.

### [Example 1]

### Preparation of binder solution

10 g of PMMA (molecular weight: 15,000) were added to 115 g of N-methyl pyrrolidone (NMP) and agitated for 12 hours, to prepare an 8%-PMMA solution. 125 g of the 8%-PMMA solution were mixed with 375 g of a 8%-PVDF solution (PVDF W#7200, manufactured by KUREHA, dissolved in NMP) and agitated for 12 hours. In this way, an 8%-binder solution (PVDF : PMMA = 3:1) was obtained.

### Production of positive electrode

### 1. Slurry preparation

Slurry preparation was performed using a 5-liter Planetary Disper.

920 g of NCM523 (manufactured by Umicore; compositional formula: LiNi_{0.5}Co_{0.2}Mn_{0.3}O₂), 20 g of SUPER-P (manufactured by TIMCAL Ltd.; conductive carbon), and 20 g of KS-6 (manufactured by TIMREX; flaky graphite) were mixed for 10 minutes, after which 100 g of N-methyl pyrrolidone (NMP) was added and mixed for a further 20 minutes.

Next, 150 g of the 8%-binder solution was added, and after kneading for 30 minutes, a further 150 g of the 8%-binder solution was added and kneading was performed for 30 minutes. Next, 200 g of the 8%-binder solution was added and kneading was performed for 30 minutes. Next, 80 g of the solution dissolved in NMP was added and kneading was performed for 30 minutes. After this, 27 g of NMP was added for viscosity adjustment and mixing was performed for 30 minutes, after which vacuum defoaming was performed for 30 minutes. In this way, a slurry having a solid content concentration of 60% was prepared.

### 2. Coating and drying

A die coater was used for slurry coating. The above-described slurry was coated and dried on one surface of aluminum foil (thickness: 20 µm, width: 200 mm) so as to obtain a coating weight after drying of 19.0 mg/cm². Next, the above-described slurry was coated and dried on the opposite surface (non-coated surface) of the aluminum foil so as to similarly obtain a coating weight of 19.0 mg/cm².

A positive electrode roll thus obtained and having both surfaces coated (38.0 mg/cm²) was dried in a vacuum drying oven at 130°C for 12 hours.

### 3. Press

A 35-ton press was used. A gap (interval) between upper and lower rolls was adjusted, and the above-described positive electrode was compressed such that the press density was 2.9 ± 0.05 g/cm³.

### 4. Slit

Positive electrode C-1 was obtained by slitting the electrode so as to obtain an electrode coating area (front face: 56 mm × 334 mm, rear face: 56 mm × 408 mm) and a blank area for tab welding.

### Production of negative electrode

### 1. Slurry preparation

Slurry preparation was performed using a 5-liter Planetary Disper.

930 g of natural graphite and 10 g of SUPER-P (conductive carbon, BET specific surface area: 62 m²/g) were mixed for 10 minutes, after which 500 g of NMP was added and mixed for a further 20 minutes. Then, 500 g of a 8%-PVDF solution (PVDF dissolved in NMP) was added and kneading was performed for 30 minutes, after which a further 250 g of the 8%-PVDF solution was added and kneading was performed for 30 minutes. After this, 32 g of NMP was added for viscosity adjustment and mixing was performed for 30 minutes, after which vacuum defoaming was performed for 30 minutes. In this way, a slurry having a solid content concentration of 45% was prepared.

### 2. Coating and drying

A die coater was used for slurry coating.

The above-described slurry was coated and dried on one surface of copper foil (thickness: 10 µm) so as to obtain a coating weight after drying of 11.0 mg/cm². Next, the above-described slurry was coated and dried on the opposite surface (non-coated surface) of the copper foil so as to similarly obtain a coating weight of 11.0 mg/cm². A negative electrode roll thus obtained and having both surfaces coated (22.0 mg/cm²) was dried in a vacuum drying oven at 120°C for 12 hours.

### 3. Press

A small-sized press was used.

A gap (interval) between upper and lower rolls was adjusted, and the above-described negative electrode was compressed such that the press density was 1.45 ± 0.05 g/cm³.

### 4. Slit

Negative electrode A-1 was obtained by slitting the electrode so as to obtain an electrode coating area (front face: 58 mm × 372 mm, rear face: 58 mm × 431 mm) and a blank area for tab welding.

### Battery production

### Roll-type battery (design capacity 1 Ah)

### 1. Rolling

A polyethylene porous film (60.5 mm × 450 mm) having a porosity of 45% and a thickness of 25 µm was used as a separator (S-1).

Negative electrode A-1 (front face/rear face), a separator (S-1), positive electrode C-1 (rear face/front face), and a separator (S-1) were stacked and rolled, after which press molding was performed. Then, an aluminum tab was welded to the blank area of positive electrode C-1 with an ultrasonic welder, and a nickel tab was welded to the blank area of negative electrode A-1 with an ultrasonic welder. This was sandwiched between laminate sheets, and three sides were thermally sealed.

### 2. Electrolyte solution injection

Before electrolyte solution injection, the foregoing was dried under reduced pressure at 70°C for 12 hours with a vacuum dryer. 4.7 ± 0.1 g of an electrolyte solution (1 mol-LiPF₆, EC/DEC = 3/7 (vol. ratio), additive VC: 1.0 weight%) was injected, after which thermal sealing was performed while performing vacuum suction.

### 3. Activation treatment

The battery after electrolyte solution injection was retained for 24 hours. Next, constant-current charging (0.05 C - CC) was performed for 4 hours at 0.05 C and then stopped for 12 hours. After this, constant-current constant-voltage charging (0.1 C - CCCV) was performed at 0.1 C to 4.2 V and stopped for 30 minutes, after which constant-current discharging (0.1 C - CC) was performed at 0.1 C to 2.8 V. In addition, a charge-discharge cycle (charging to 4.2 V at 0.1 C - CCCV and discharging to 2.8 V at 0.1 C - CC) was repeated five times, after which the battery was retained at 25°C for five days in a fully charged state at 4.2 V (SOC 100%). In this way, battery D-1 was obtained.

### [Example 2]

Positive electrode C-2 was obtained by slitting a positive electrode roll, which was prepared in the same manner as in Example 1, so as to obtain an electrode coating area (front face and rear face: 174 mm × 94 mm) and a blank area for tab welding.

Negative electrode A-2 was obtained by slitting a negative electrode roll, which was prepared in the same manner as in Example 1, so as to obtain an electrode coating area (front face and rear face: 180 mm × 100 mm) and a blank area for tab welding.

### Battery production

### Layer-type battery (design capacity 5 Ah)

An aluminum tab was welded to the blank area of positive electrode C-2 with an ultrasonic welder. A nickel tab was welded to the blank area of negative electrode A-2 with an ultrasonic welder.

### 1. Layering

A polyethylene porous film (183 mm × 100 mm) having a porosity of 45% and a thickness of 25 µm was used as a separator (S-2).

In the order of negative electrode A-2, separator (S-2), positive electrode C-2, separator (S-2), and negative electrode A-2, alternate layering was performed so as to result in five layers of positive electrode and six layers of negative electrode. Then, this was sandwiched between laminate sheets, and three sides were thermally sealed.

### 2. Electrolyte solution injection

Before electrolyte solution injection, the foregoing was dried under reduced pressure at 70°C for 12 hours with a vacuum dryer. 19.6 ± 0.3 g of an electrolyte solution (1 mol-LiPF₆, EC/DEC = 3/7 (vol. ratio), additive VC: 1.0 weight%) was injected, after which thermal sealing was performed while performing vacuum suction.

### 3. Activation treatment

Activation treatment was performed in the same manner as in Example 1, and battery D-2 was obtained.

### [Test Example 1 and Comparative Test Example 1]

Using the roll-type battery (design capacity 1 Ah) produced in Example 1, a nail piercing test was performed. A nail having a diameter of 6 mm was inserted into a central part of a battery (cell) at a speed of 20 mm/sec, and the positive electrode and negative electrode inside the battery container were short circuited. As a result of investigating whether or not the battery ruptured or swelled and whether or not flames and/or smoke were emitted from the battery, in ten instances of nail piercing tests performed using batteries produced with identical specifications, there were only four cases that were observed to catch fire, and in the remaining six instances, there was only slight smoke emission.

As Comparative Test Example 1, a roll-type battery (design capacity 1 Ah) was prepared in the same manner as that in Example 1, except that only PVDF was used as a binding material without adding the mixture of PVDF/PMMA = 3/1. When the nail piercing tests were performed in the same manner, flame was observed in seven of ten instances.

Typical heat generation profiles in the present tests are shown in Fig. 9A and Fig. 9B. As shown in these drawings, it was understood that the heat generation speed of the roll-type battery produced in Example 1 (Test Example 1) was significantly slower compared to in Comparative Test Example 1, and that the maximum temperature reached was also lower.

### [Test Example 2 and Comparative Test Example 2]

Using the layer-type battery (design capacity 5 Ah) produced by the method described in Example 2, a nail piercing test was performed in the same manner as in Test Example 1 (nail diameter: 6 mm, nail insertion speed: 20 mm/sec). As the results, flames were not even observed once in ten instances of nail piercing tests. In contrast, as Comparative Test Example 2, a layer-type battery prepared in the same manner as in Example 2 except for using only PVDF as a binding material without adding the PMMA was observed to catch fire in three out often instances of nail piercing tests, and thus a clear difference was recognized.

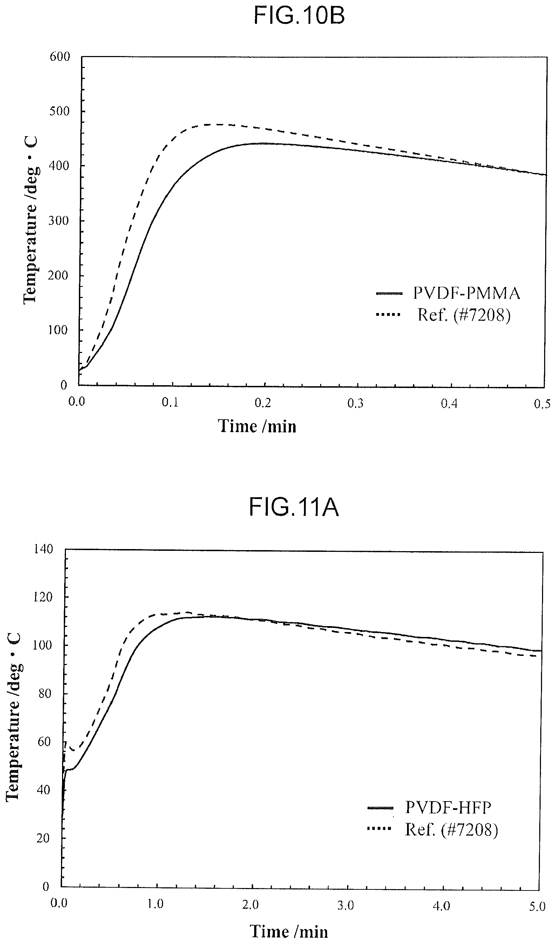

Typical heat generation profiles in the present tests are shown in Fig. 10A and Fig. 10B. As shown in these drawings, it was understood that the heat generation speed of the layer-type battery produced in Example 2 (Test Example 2) was slower compared to in Comparative Test Example 2, and that the maximum temperature reached was also lower.

### [Test Example 3]

Using a roll-type battery (design capacity 1 Ah) produced in the same manner as in Example 1 except for using a binding material mixture of PVDF (KUREHA 7200)/PVDF-HFP (ARKEMA 2751) = 2/2 instead of the binding material of PVDF (KUREHA 7200)/PMMA (molecular weight 15,000) = 3/1, a nail piercing test was performed in the same manner as in Test Example 1 (nail diameter: 6 mm, nail insertion speed: 20 mm/sec). As the results, flames were only observed in two instances out of ten nail piercing tests, and only slight smoking was observed in the remaining eight instances.

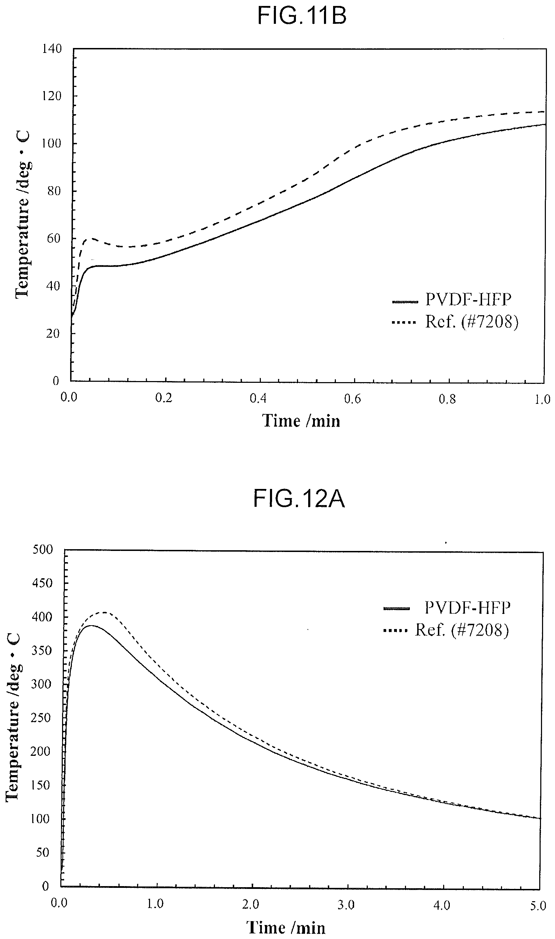

Typical heat generation profiles in the present test are shown in Fig. 11A and Fig. 11B. As shown in these drawings, it is understood that the maximum temperature reached owing to heat generation by the roll-type battery of the present Test Example 3 was significantly lower compared to Comparative Test Example 1.

### [Test Example 30 and Comparative Test Example 3]

Using a roll-type battery (design capacity 1 Ah) produced in the same manner as that in Example 1 except for using NCA instead of the positive electrode active material NCM523 and using a binding material mixture of PVDF (KUREHA 7200)/PVDF-HFP (ARKEMA 2751) = 2/2 instead of the binding material of PVDF (KUREHA 7200)/PMMA (molecular weight 15,000) = 3/1, a nail piercing test was performed in the same manner as in Test Example 1 (but with a nail diameter of 3 mm and a nail insertion speed of 10 mm/sec). As the results, flames were observed in four of ten instances of nail piercing tests. In contrast, as Comparative Test Example 3, with a roll-type battery (design capacity 1 Ah) prepared in the same manner as that in Example 1 except for using NCA instead of the positive electrode active material NCM523 and using only PVDF as the binding material, flames were observed in all ten instances, and clear differences in heat generation properties were recognized.

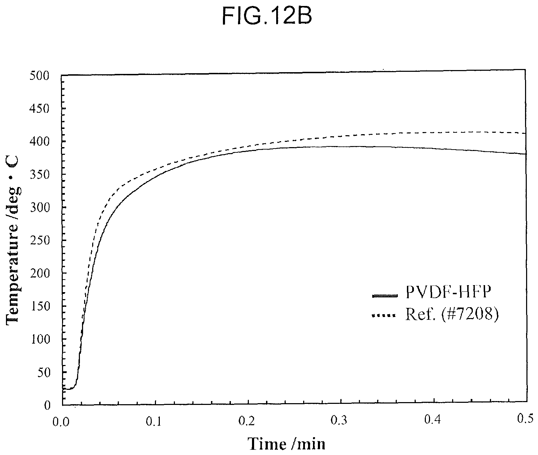

Typical heat generation profiles in the present tests are shown in Fig. 12A and Fig. 12B. As shown in these drawings, it is understood that the maximum temperature reached owing to heat generation by the roll-type battery of the present Test Example 3 was significantly lower compared to Comparative Test Example 2.

### [Test Examples 4 to 29 and 31 to 35]

Respective roll-type batteries (design capacity 1 Ah) were produced in the same manner as that in Examples 1 or Example 3, while modifying the types and blending amounts of the binding component and the PTC functionality-imparting component used in the composite PTC binding material.

**Table 5-1 Positive electrode specifications**

| Test Example | Positive electrode composition | | | | | | | | | | |
|---|---|---|---|---|---|---|---|---|---|---|---|
| | Positive electrode active material | Active material % | Super-P % | KS6 % | PTC functionality-imparting binding material | | | | | | Coating amount per one face (mg/cm²) |
| | | | | | % | PVDF | % | PTC functionality-imparting material | | % | |
| 1 | NCM523 | 92 | 2 | 2 | 4 | 7200 | 3 | PMMA | 15,000 | 1 | 19.0 |
| 2 | NCM523 | 92 | 2 | 2 | 4 | 7200 | 3 | PMMA | 15,000 | 1 | 19.0 |
| 3 | NCM523 | 92 | 2 | 2 | 4 | 7200 | 2 | PVDF-HFP (2751) | | 2 | 19.0 |
| 4 | NCM523 | 92 | 2 | 2 | 4 | 7200 | 3 | PMMA | 350,000 | 1 | 19.0 |
| 5 | NCM523 | 92 | 2 | 2 | 4 | 7200 | 3 | PMA | 40,000 | 1 | 19.0 |
| 6 | NCM523 | 92 | 2 | 2 | 4 | 7200 | 3 | PAA | 20,000 | 1 | 19.0 |
| 7 | NCM523 | 92 | 2 | 2 | 4 | 7200 | 3 | PVAc | 100,000 | 1 | 19.0 |
| 8 | NCM523 | 92 | 2 | 2 | 4 | 7200 | 3 | PVAc | 500,000 | 1 | 19.0 |
| 9 | NCM523 | 92 | 2 | 2 | 4 | 7200 | 2 | PVDF-HFP (2801) | | 2 | 19.0 |
| 10 | NCM523 | 92 | 2 | 2 | 4 | 7200 | 2 | PVDF-HFP (2851) | | 2 | 19.0 |
| 11 | NCM523 | 92 | 2 | 2 | 4 | 7300 | 3 | BMI-1 000 | | 1 | 19.0 |
| 12 | NCM523 | 92 | 2 | 2 | 4 | 7300 | 3 | BMI-2300 | | 1 | 19.0 |
| 13 | NCM523 | 92 | 2 | 2 | 4 | 7300 | 3 | BMI-4000 | | 1 | 19.0 |
| 14 | NCM523 | 92 | 2 | 2 | 4 | 7300 | 3 | PMMA | 15,000 | 1 | 19.0 |
| 15 | NCM523 | 92 | 2 | 2 | 4 | 7300 | 3 | PVAc | 500,000 | 1 | 19.0 |
| 16 | NCM523 | 92 | 2 | 2 | 4 | 7300 | 2 | PVDF-HFP (2751) | | 2 | 19.0 |
| 17 | NCM523 | 92 | 2 | 2 | 4 | 7300 | 2 | PVDF-HFP (2801) | | 2 | 19.0 |
| 18 | NCM523 | 92 | 2 | 2 | 4 | 7300 | 2 | PVDF-HFP (2851) | | 2 | 19.0 |
| 19 | NCM523 | 92 | 2 | 2 | 4 | 9300 | 2 | PVDF-HFP (2751) | | 2 | 19.0 |
| 20 | NCM523 | 92 | 2 | 2 | 4 | 9300 | 2 | PVDF-HFP (2801) | | 2 | 19.0 |
| 21 | NCM523 | 92 | 2 | 2 | 4 | 9300 | 2 | PVDF-HFP (2851) | | 2 | 19.0 |
| 22 | NCM523 | 92 | 2 | 2 | 4 | 761 | 2 | PVDF-HFP (2751) | | 2 | 19.0 |
| 23 | NCM523 | 92 | 2 | 2 | 4 | 761 | 2 | PVDF-HFP (2801) | | 2 | 19.0 |
| 24 | NCM523 | 92 | 2 | 2 | 4 | 761 | 2 | PVDF-HFP (2851) | | 2 | 19.0 |
| 25 | NCM523 | 92 | 2 | 2 | 4 | 711 | 2 | PVDF-HFP (2751) | | 2 | 19.0 |
| 26 | NCM523 | 92 | 2 | 2 | 4 | 711 | 2 | PVDF-HFP (2801) | | 2 | 19.0 |
| 27 | NCM523 | 92 | 2 | 2 | 4 | 711 | 2 | PVDF-HFP (2851) | | 2 | 19.0 |
| 28 | NCM523 | 92 | 2 | 2 | 4 | HSV-900 | 2 | PVDF-HFP (2751) | | 2 | 19.0 |
| 29 | NCM523 | 92 | 2 | 2 | 4 | HSV-900 | 2 | PVDF-HFP (2801) | | 2 | 19.0 |
| 30 | NCA | 92 | 2 | 2 | 4 | 7200 | 2 | PVDF-HFP (2751) | | 2 | 19.0 |
| 31 | NCA | 92 | 2 | 2 | 4 | 7200 | 2 | PVDF-HFP (2801) | | 2 | 17.5 |
| 32 | NCA | 92 | 2 | 2 | 4 | 7200 | 2 | PVDF-HFP (2851) | | 2 | 17.5 |
| 33 | NCA | 92 | 2 | 2 | 4 | 7200 | 3 | PMMA | 15,000 | 1 | 17.5 |
| 34 | NCA | 92 | 2 | 2 | 4 | 7200 | 3 | PVAc | 500,000 | 1 | 17.5 |
| 35 | NCA | 92 | 2 | 2 | 4 | 7200 | 3 | BMI-1000 | | 1 | 17.5 |

**Table 5-2 Comparative example positive electrode specifications**

| Comparative Test Example | Positive electrode active material | Positive electrode composition | | | | |
|---|---|---|---|---|---|---|
| | | Active material % | Super-P % | KS6 % | PVDF % | Coating amount per one face (mg/cm²) |
| 1 | NCM523 | 92 | 2 | 2 | 4 | 19.0 |
| 2 | NCM523 | 92 | 2 | 2 | 4 | 19.0 |
| 3 | NCA | 92 | 2 | 2 | 4 | 17.5 |

**Table 5-3 Negative electrode specifications**

| Negative electrode | Positive electrode active material | Negative electrode composition | | | |
|---|---|---|---|---|---|
| | | Active material % | Super-P % | KS6 % | Coating amount per one face (mg/cm²) |
| 1 | Natural graphite | 93 | 1 | 6 | 11.0 |

The results of nail piercing tests performed using these according to the same method as in Test Example 1 are shown in the following tables.

**Table 6-1**

| Test Example | Type | Nail piercing test Number of OK tests out of ten tests | Event | Heat generation inhibiting effect relative to comparative example Y/N |
|---|---|---|---|---|
| 1 | 1 Ah Roll | 6/10 | Smoke | Y |
| 2 | 5 Ah Layer | 6/10 | Smoke | Y |
| 3 | | 9/10 | Smoke | Y |
| 4 | | 7/10 | Smoke | Y |
| 5 | | 7/10 | Smoke | Y |
| 6 | | 6/10 | Smoke | Y |
| 7 | | 7/10 | Smoke | Y |
| 8 | | 7/10 | Smoke | Y |
| 9 | | 8/10 | Smoke | Y |
| 10 | | 8/10 | Smoke | Y |
| 11 | | 6/10 | Smoke | Y |
| 12 | | 6/10 | Smoke | Y |
| 13 | | 6/10 | Smoke | Y |
| 14 | | 7/10 | Smoke | Y |
| 15 | | 7/10 | Smoke | Y |
| 16 | 1 Ah Roll | 8/10 | Smoke | Y |
| 17 | | 8/10 | Smoke | Y |
| 18 | | 7/10 | Smoke | Y |
| 19 | | 8/10 | Smoke | Y |
| 20 | | 7/10 | Smoke | Y |
| 21 | | 7/10 | Smoke | Y |
| 22 | | 8/10 | Smoke | Y |
| 23 | | 8/10 | Smoke | Y |
| 24 | | 8/10 | Smoke | Y |
| 25 | | 7/10 | Smoke | Y |
| 26 | | 8/10 | Smoke | Y |
| 27 | | 7/10 | Smoke | Y |
| 28 | | 9/10 | Smoke | Y |
| 29 | | 8/10 | Smoke | Y |
| 30 | 1 Ah Roll | 3/10 | Fire | Y |
| 31 | | 2/10 | Fire | Y |
| 32 | | 2/10 | Fire | Y |
| 33 | | 1/10 | Fire | Y |
| 34 | | 2/10 | Fire | Y |
| 35 | | 1/10 | Fire | Y |

**Table 6-2**

| Comparative Test Example | Type | Nail piercing test Number of OK tests out of ten tests | Event |
|---|---|---|---|
| 1 | 1 Ah Roll | 5 | Smoke |
| 2 | 5 Ah Layer | 7 | Fire |
| 3 | 1 Ah Roll | 0 | Spark/Fire |

As shown in the tables, it is understood that the occurrence of flames and smoke due to the nail piercing tests was significantly inhibited in all of the Test Examples as compared to the Comparative Test Examples.

### Explanation of Reference Numerals

- 1: Non-aqueous electrolyte secondary battery
- 10: Battery element
- 11, 31, 42, 56: Positive electrode
- 11A, 313, 423: Positive electrode current collector
- 11B: Positive electrode active material layer
- 12, 55: Negative electrode
- 12A, 52: Negative electrode current collector
- 12B, 53: Negative electrode active material layer
- 13, 54: Separator
- 14: Single battery layer
- 21: Positive electrode lead
- 22: Negative electrode lead
- 30: Outer packaging
- 311,422: Layer A
- 312,421: Layer B
- 314, 424: Positive electrode mix layer
- 315, 425, 51, 61: Nail
- 62: Conductive auxiliary agent
- 63: Electrode active material
- 64: Binding material
- 71: Melting point depressant
- 72: Electrolyte (for example: LiPF₆)
- 73: Solvent (for example: EC/DEC)

## Claims

1. A non-aqueous electrolyte secondary battery, comprising:
at least a pair of electrodes consisting of a positive electrode and a negative electrode having, on one or both surfaces of a current collector, an electrode mix layer including a conductive auxiliary agent, a binding material, and an electrode active material that includes one or more materials selected from the group consisting of materials capable of insertion and extraction of a lithium ion;
a separator; and
a non-aqueous electrolyte,
wherein the binding material is a composite PTC binding material including polyvinylidene fluoride and a PTC functionality-imparting component, and a melting start temperature and/or a melting peak temperature of the binding material measured by a differential scanning calorimetry in the presence of the non-aqueous electrolyte is lower than in a case in which the binding material includes only polyvinylidene fluoride.

2. The non-aqueous electrolyte secondary battery according to claim 1, wherein the PTC functionality-imparting component is a compound having a carbonyl group or a cyano group.

3. The non-aqueous electrolyte secondary battery according to claim 1 or claim 2, wherein the PTC functionality-imparting component is a crystalline or non-crystalline polymer including a carboxyl group, a carboxylic acid ester group, a carbonate group, an imide group, or an amide group.

4. The non-aqueous electrolyte secondary battery according to any one of claims 1 to 3, wherein the PTC functionality-imparting component is at least one selected from the group consisting of acrylic acid, methacrylic acid, polymethyl acrylate, polymethyl methacrylate, polyvinyl acetate, di-2-ethylhexyl phthalate, polybutylene succinate, polycarbonate, polyacrylonitrile, polyamide, polyimide, polyamide imide, bismaleimide and derivatives or copolymers thereof.

5. The non-aqueous electrolyte secondary battery according to any one of claims 1 to 4, wherein a content ratio of the PTC functionality-imparting component included in the binding material is from 1 to 50 mass%.

6. The non-aqueous electrolyte secondary battery according to claim 1, wherein the binding material is a mixture including polyvinylidene fluoride and, as a PTC functionality component, a copolymer of a vinylidene fluoride monomer and another fluorine-containing monomer or an oxygen-containing monomer.

7. The non-aqueous electrolyte secondary battery according to any one of claims 1 to 6, wherein the melting start temperature of the binding material measured by a differential scanning calorimetry in the presence of the non-aqueous electrolyte is from 70°C to 100°C.

8. The non-aqueous electrolyte secondary battery according to any one of claims 1 to 6, wherein the melting peak temperature of the binding material measured by a differential scanning calorimetry in the presence of the non-aqueous electrolyte is from 70°C to 130°C.

9. The non-aqueous electrolyte secondary battery according to any one of claims 1 to 8, wherein the binding material is included in the positive electrode mix layer.

10. The non-aqueous electrolyte secondary battery according to claim 9, wherein the positive electrode active material is a lithium-nickel-cobalt-aluminum-based oxide (NCA) and/or a lithium-nickel-cobalt-manganese-based oxide (NCM).

11. The non-aqueous electrolyte secondary battery according to any one of claims 1 to 10, wherein the non-aqueous electrolyte comprises an electrolyte solution in which a lithium salt including at least LiPF6 as an electrolyte is dissolved in a single organic solvent selected from cyclic carbonates or chain carbonates or is dissolved in a solvent mixture combining a plurality of organic solvents selected from cyclic carbonates or chain carbonates.

12. A method of manufacturing the non-aqueous electrolyte secondary battery according to any one of claims 1 to 11, the method comprising producing a positive electrode by coating a slurry for forming a positive electrode mix layer onto one or both surfaces of a current collector, the slurry comprising a positive electrode active material and a conductive auxiliary agent dispersed in a solution in which a binding material including polyvinylidene fluoride (PVDF) and a PTC functionality-imparting component has been dissolved in a solvent.

13. A composite PTC binding material for a non-aqueous electrolyte secondary battery, the composite PTC binding material comprising:
polyvinylidene fluoride (PVDF), which is a binding component; and
a PTC functionality-imparting component,
wherein a melting start temperature and/or a melting peak temperature of the composite PTC binding material measured by a differential scanning calorimetry in the presence of a non-aqueous electrolyte is lower than in a case in which only the binding component is included.

14. A positive electrode for a lithium ion secondary battery, the positive electrode comprising a current collector and a positive electrode mix layer coated on the current collector, and the positive electrode mix layer comprising:
a layer A including a positive electrode active material, a conductive auxiliary agent and a binding material; and
a layer B including a positive electrode active material, a conductive auxiliary agent and the composite PTC binding material according to claim 13.

15. The positive electrode for a lithium ion secondary battery according to claim 14, wherein, in a thickness direction of the positive electrode mix layer, the layer B is provided at a side of the current collector, and the layer A is provided at an opposite side of the layer B from the current collector.

16. The positive electrode for a lithium ion secondary battery according to claim 14, wherein, in a thickness direction of the positive electrode mix layer, the layer A is provided at a side of the current collector, and the layer B is provided at an opposite side of the layer A from the current collector.

17. A lithium ion secondary battery, comprising an electrode, a separator and a non-aqueous electrolyte, wherein:
the electrode comprises an electrode active material, a conductive auxiliary agent, and a binding material configured by a binding component that binds the conductive auxiliary agent and forms a conduction path between the electrode active material, and by a melting point depressant that lowers a melting point of the binding component; and
when short circuit heat generation has occurred within the battery due to a conductive foreign substance, the binding material at a periphery of the foreign substance melts to sever the conduction path.

18. The lithium ion secondary battery according to claim 17, wherein the binding component is polyvinylidene fluoride (PVDF).

19. The lithium ion secondary battery according to claim 18, wherein the PVDF forms the conduction path by forming a structure having fibrillary form within which the electrode active material and the conductive auxiliary agent are intertwined.

20. The lithium ion secondary battery according to claim 19, wherein the melting point depressant reduces the crystallinity of the structure having fibrillary form.
